(19) Europäisches Patentamt
European Patent Office
Office européen des brevets

(11) **EP 1 868 410 A1**

(12) **EUROPEAN PATENT APPLICATION**
published in accordance with Art. 158(3) EPC

(43) Date of publication:
**19.12.2007 Bulletin 2007/51**

(51) Int Cl.:
*H04R 1/02* (2006.01)    *H04R 1/28* (2006.01)

(21) Application number: **06730121.8**

(22) Date of filing: **27.03.2006**

(86) International application number:
**PCT/JP2006/306173**

(87) International publication number:
**WO 2006/104103 (05.10.2006 Gazette 2006/40)**

(84) Designated Contracting States:
**DE FI FR GB**

(30) Priority: **28.03.2005 JP 2005090890**

(71) Applicant: **MATSUSHITA ELECTRIC INDUSTRIAL CO., LTD.**
**Osaka 571-8501 (JP)**

(72) Inventors:
• **MATSUMURA, Toshiyuki**
**c/o Matsushita Electric Industrial Co.,Ltd.**
**2-1-61, Shiromi,Chuo-ku, Osaka-shi, Osaka 540-6207 (JP)**

• **SAIKI, Shuji**
**c/o Matsushita Electric Industrial Co.,Ltd.**
**2-1-61, Shiromi,Chuo-ku, Osaka-shi, Osaka 540-6207 (JP)**

(74) Representative: **Gassner, Wolfgang**
**Patentanwälte**
**Dr. Gassner & Partner**
**Marie-Curie-Strasse 1**
**91052 Erlangen (DE)**

(54) **LOUDSPEAKER DEVICE**

(57) A loudspeaker system according to the present invention comprises a cabinet, a speaker unit mounted in the cabinet, and a powdery gas absorption material which is disposed in an internal space of the cabinet and physically absorbs gas being present in the internal space of the cabinet. An average particle diameter of the gas absorption material is less than 0.1 mm. Thus, according to the present invention, the loudspeaker system which expands a low frequency band, prevents a reduction in an acoustic pressure level, exhibits a volume expansion effect also in a high frequency band of 100 to 200 Hz or more, is compact, and enables enriched bass reproduction can be realized.

FIG. 1

EP 1 868 410 A1

**Description**

TECHNICAL FIELD

The present invention relates to a loudspeaker system and more particularly, to a loudspeaker system, having a small-sized cabinet, which realizes enriched bass reproduction.

BACKGROUND ART

Due to an influence of an acoustic stiffness which an internal space of a cabinet causes, a conventional loudspeaker system has had difficulties in realizing a loudspeaker system which is compact and capable of reproducing bass. Limitations in this bass reproduction depend on a magnitude of the acoustic stiffness, namely a volumetric capacity of an inside of the cabinet. Therefore, as a solution to the problem of these limitations in bass reproduction, there has been a loudspeaker system in which a block of activated carbon is disposed inside of a cabinet (for example, refer to patent document 1).

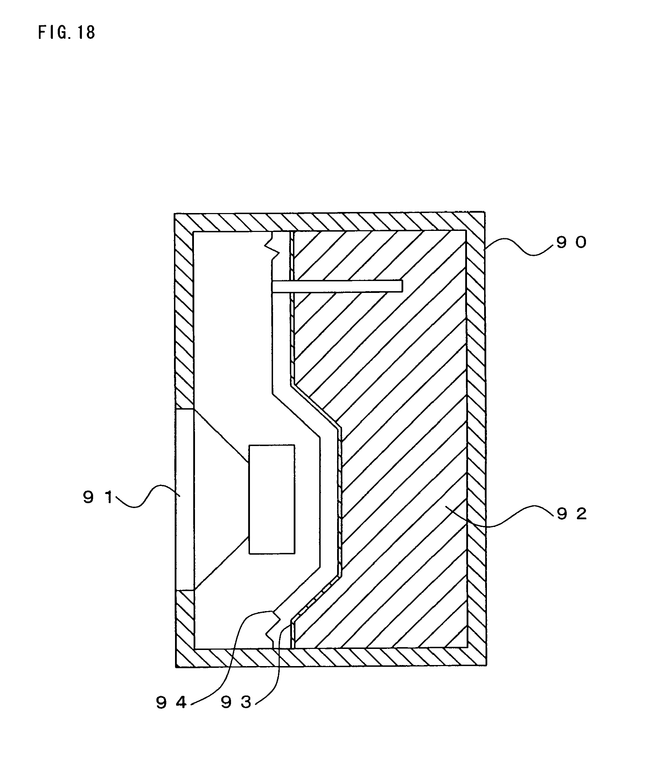

FIG. 18 is a tectonic profile of a major portion of a conventional loudspeaker system. In FIG. 18, the conventional loudspeaker system comprises a cabinet 90, a woofer 91, an activated carbon 92, a supporting member 93, and a diaphragm 94. The woofer 91 is attached on a front face of the cabinet 90. The activated carbon 92 which includes grains, with an average grain diameter of 0.1 to 0.3 mm, of activated carbon (hereinafter, referred to as granular activated carbon) is disposed inside of the cabinet 90 in a block-like manner. The activated carbon 92 is supported by a back face, a bottom face, an upper face, right and left side faces of the cabinet 90, and the supporting member 93. The supporting member 93 has fine pores formed on an entire surface thereof, through which air passes.

Next, operations of the conventional loudspeaker system shown in FIG. 18 will be described. When an electrical signal is applied to the woofer 91, an acoustic pressure is generated. Due to this acoustic pressure, a pressure in an internal space of the cabinet 90 changes. And this pressure change vibrates the diaphragm 94. And the vibration of the diaphragm 94 changes a pressure in a space where the activated carbon 92 is disposed. The activated carbon 92 is supported by the supporting member 93 and the cabinet 90 in a block-like manner. The supporting member 104 has the fine pores formed on the entire surface thereof as mentioned above. Therefore, gas, along with the pressure change caused by the vibration of the diaphragm 94, is physically absorbed by the activated carbon 92, thereby suppressing the pressure change in the internal space of the cabinet 90. Here, that the pressure change in the internal space of the cabinet 90 is suppressed means that the cabinet 90 operates as if the cabinet 90 had a large volume. As mentioned above, the activated carbon 92 exhibits a volume expansion effect that a physical absorption effect which the activated carbon 92 has expands the volume inside of the cabinet 90 in an equivalent manner. As a result, in the conventional loudspeaker system, even with the cabinet being small-sized, bass reproduction which could be realized if a speaker unit were mounted in a large cabinet is enabled.

[Patent document 1] Japanese National Phase PCT Laid-Open Publication No. 60-500645

DISCLOSURE OF THE INVENTION

PROBLEMS TO BE SOLVED BY THE INVENTION

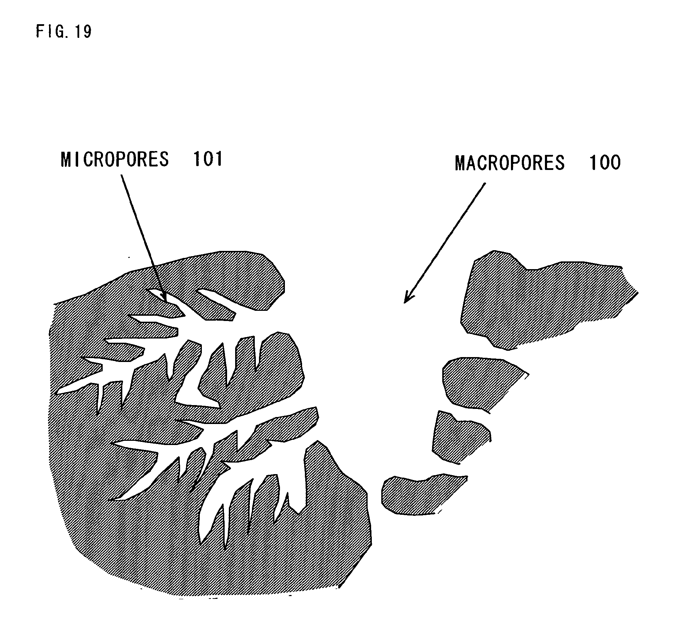

Here, a structure of the activated carbon 92 will be considered. The activated carbon 92 in the above-mentioned conventional loudspeaker system has the structure formed in a block-like manner, in which grains of activated carbon, with an average grain diameter of 0.1 to 0.3 mm, are included. Each of the grains has innumerable fine pores formed therein. A specific surface area per unit weight of the granular activated carbon is approximately 1000 $m^2$/g. These fine pores are, as shown in FIG. 19, classified broadly into macropores 100 formed in the vicinity of a surface of the granular activated carbon and micropores 101 formed inside of the granular activated carbon. FIG. 19 is a schematic diagram illustrating a structure of the fine pores formed in the granular activated carbon. Here, it has been considered that the reason why the activated carbon 92 exhibits the above-mentioned volume expansion effect is that gas is physically absorbed by the micropores 101. On the other hand, the macropores 100 function as passageways through which the gas reaches the micropores 101.

Here, in the granular activated carbon with an average grain diameter of greater than or equal to 0.1 mm, a ratio of a volume which the macropores 100 occupy is larger than that of a volume which the micropores 101 occupy. Therefore, the physical absorption effect per volume of the granular activated carbon is limited due to the large ratio of the volume of the macropores 100. Accordingly, in order to obtain a large volume expansion effect, it is required that a large amount of the granular activated carbon is collected and a volume of the activated carbon 92 is enlarged. However, in a small-sized loudspeaker system, since a volume inside of the cabinet 90 is small, a volume of an activated carbon 92 which can be mounted is limited. Accordingly, in the small-sized loudspeaker system, due to the limited volume of the activated carbon 92 which can be disposed inside of the cabinet 90, a sufficient physical absorption effect cannot be obtained, thereby resulting in difficulties of expanding a desired low frequency band.

In addition, the macropores 100 functioning as the passageways of the gas serve as an acoustic resistance which suppresses a flow of the gas which reaches the micropores 101. Accordingly, in the granular activated carbon with the average grain diameter of greater than or equal to 0.1 mm, since the ratio of the volume of the macropores 100 is large, a loss of acoustic energy, which is caused by the above-mentioned acoustic resistance, is also large, leading to a problem that an acoustic pressure level of a low frequency band is significantly reduced.

Moreover, when a frequency band of an acoustic pressure is high, the macropores 100 functioning as the passageways of the gas serve as a high-cut filter which blocks a transmission of sound with space volumes and lengths of the passageways of the macropores 100. Due to this influence of the macropores 100, in a high frequency band of greater than or equal to 100 to 200 Hz, a flow of the gas into the micropores 101 is suppressed. As a result, in the high frequency band of greater than or equal to 100 to 200 Hz, the physical absorption effect can be hardly obtained. Therefore, when the volume expansion effect is tried to be obtained by using, as the activated carbon 92, the granular activated carbon with the average grain diameter of greater than or equal to 0.1 mm, there accrues a problem that an application thereof is limited to a loudspeaker system which is dedicated to bass of less than or equal to 100 Hz.

Hence, an object of the present invention is to provide a loudspeaker system which is compact and capable of reproducing enriched bass, expanding a low frequency band, preventing a reduction in an acoustic pressure level, and exhibiting a volume expansion effect even in a high frequency band of 100 to 200 Hz or more.

SOLUTION TO THE PROBLEMS

A first aspect of the present invention is directed to a loudspeaker system comprising: a cabinet; a cabinet; a speaker unit mounted in the cabinet; and a powdery gas absorption material which is disposed in an internal space of the cabinet and physically absorbs gas present in the internal space, wherein an average particle diameter of the gas absorption material is less than 0.1 mm.

In a second aspect based on the first aspect, diameters of all particles of the gas absorption material are less than 0.1 mm.

In a third aspect based on the first aspect, the gas absorption material is of activated carbon.

In a fourth aspect based on the first aspect, the gas absorption material is of activated carbon which is produced from plant, petroleum resin, or coal.

In a fifth aspect based on the first aspect, the loudspeaker system further comprises a first blocking member for blocking gas, and the gas absorption material is disposed in an internal space of the first blocking member.

In a sixth aspect based on the fifth aspect, the first blocking member is made of a thin film.

In a seventh aspect based on the fifth aspect, a space is formed inside of the first blocking member and above the gas absorption material.

In an eighth aspect based on the fifth aspect, the loudspeaker system comprises a plurality of the first blocking members, the gas absorption material is segmented and each segment is disposed in an internal space of each of the first blocking members, and each of the first blocking members is disposed in an internal space of the cabinet so as to form a space between each other.

In a ninth aspect based on the eighth aspect, the loudspeaker system further comprises a plurality of housings, in at least a part of which an opening is formed, a volume of each of the housings is larger than a volume of the first blockingmember, and the first blocking member is disposed in an internal space of each of the housings.

In a tenth aspect based on the fifth aspect, the loudspeaker system comprises a plurality of the first blocking members, the gas absorption material is segmented and each segment is disposed an internal space of the first blocking member, the first blocking member has: a housing, in at least a part of which an opening is formed; and a film, a periphery of which is attached on the opening, and the segmented gas absorption material is each disposed in an internal space of the housing.

In a eleventh aspect based on the first aspect, the loudspeaker system further comprises a passive radiator which is mounted in the cabinet and driven by vibration of the speaker unit.

In a twelfth aspect based on the eleventh aspect, the loudspeaker system further comprises a plate member which is disposed between the passive radiator and the gas absorption material so as to form a space between the plate member and the passive radiator.

In a thirteenth aspect based on the twelfth aspect, in the plate member, an opening is formed in a direction from the passive radiator toward the gas absorption material.

In a fourteenth aspect based on the first aspect, the cabinet is a closed-type cabinet.

In a fifteenth aspect based on the first aspect, the loudspeaker system further comprises an acoustic port which is mounted in the cabinet and acoustically couples an internal space and an external space of the cabinet.

A sixteenth aspect of the present invention is directed to a mobile terminal unit comprising: a loudspeaker system according to any of claims 1 to 15; and a case supporting the loudspeaker system.

In a seventeenth aspect based on the sixteenth aspect, the speaker unit has; a voice coil; and a diaphragm, on one face of which the voice coil is fixed, and the speaker unit is mounted such that another face of the diaphragm faces an internal space of the cabinet.

In an eighteenth aspect based on the sixteenth aspect, the mobile terminal unit further comprises a second blocking member for blocking the gas absorption material, and the second blocking member is disposed in the internal space of the cabinet so as to partition the speaker unit and the gas absorption material.

A nineteenth aspect of the present invention is directed to a vehicle comprising: a loudspeaker system according to any of claims 1 to 15; and a car body, inside of which the loudspeaker system is disposed.

A twentieth aspect of the present invention is directed to a video apparatus comprising: a loudspeaker system according to any of claims 1 to 15; and a housing, inside of which the loudspeaker system is disposed.

EFFECT OF THE INVENTION

According to the above-mentioned first aspect, since the average particle diameter of the gas absorption material is less than 0.1 mm, a ratio of a volume of the micropore which physically absorbs the gas is large as compared with that of the conventional gas absorption material whose average grain diameter is greater than or equal to 0.1 mm. Therefore, a volume expansion ratio of the gas absorption material whose average particle diameter is less than 0.1 mm is large as compared with that of the conventional one. The volume expansion ratio markedly increases in a range in which the average particle diameter is less than 0.1 mm. Thus, by using the gas absorption material whose average particle diameter is less than 0.1 mm, a sufficiently great volume expansion effect can be obtained as compared with a case where the conventional gas absorption material whose average grain diameter is greater than or equal to 0.1 mm is used. As a result, in a case where a volume of the gas absorption material is the same as that of the conventional one, a low frequency band can be further expanded as compared with that of the conventional one. In a case where the same width of the low frequency band as that of the conventional one is expanded, a volume of the gas absorption material itself can be reduced as compared with that of the conventional one. As a result, the loudspeaker system can be downsized as compared with the conventional one. In addition, according to the first aspect of the present invention, since a ratio of a volume of the macropores formed in the gas absorption material is small as compared with that of the conventional one, the effect of functioning as a high-cut filter, which is caused by the macropores, can be reduced. As a result, even a compact loudspeaker system, which is used for, for example, a reproduction of a frequency band of 100 to 200 Hz or more, can exhibit the volume expansion effect, allowing the low frequency band to be expanded. Further, according to the first aspect of the present invention, since the ratio of the volume of the macropores formed in the gas absorption material is small as compared with that of the conventional one, a value of an acoustic resistance, which is caused when gas passes through the macropores, is small. Thus, a reduction in an acoustic pressure level, which is caused by the acoustic resistance, can be suppressed.

According to the above-mentioned second aspect, the low frequency band can be further expanded.

According to the above-mentioned third aspect, the gas absorption material can be of activated carbon.

According to the above-mentioned fourth aspect, the gas absorption material can be of activated carbon which is produced from plant, petroleum resin, or coal.

According to the above-mentioned 5 to 6 aspects, a reduction in an effect of physically absorbing gas, which is caused when the micropores formed in the gas absorption material 12 absorb moisture, toxic gas, cigarette smoke, odor, and the like in external air, can be prevented. As a result, the volume expansion effect, which is brought about by the gas absorption material, can be exhibited for a long term. Scattering of the gas absorption material in an internal space of the cabinet can be prevented.

According to the above-mentioned seventh aspect, the acoustic pressure generated from the speaker unit is easily transmitted to the gas absorption material, thereby allowing the low frequency band to be further expanded.

According to the above-mentioned eighth to tenth aspects, the gas absorption material does not collect and a length of a passageway through which the gas reaches an inside of the gas absorption material is substantially reduced as compared with a case where the gas absorption material is disposed in an internal space of one first blocking member. In addition, an area in which the gas absorption material contacts the gas is enlarged. Thus, the acoustic resistance which the gas absorption material has can be reduced and the acoustic pressure level of the low frequency band can be further improved.

According to the above-mentioned eleventh aspect, the loudspeaker system of the present invention functions as a passive radiator type loudspeaker system which is one of the phase inversion type systems, enabling a further improvement in the acoustic pressure level of the low frequency band as compared with that of the conventional one.

According to the above-mentioned twelfth aspect, it can be prevented that the passive radiator contacts the gas absorption material.

According to the above-mentioned thirteenth aspect, the acoustic pressure level of the low frequency band is further improved.

According to the above-mentioned fourteenth aspect, it can be prevented that gas outside of the cabinet directly contacts the gas absorption material.

According to the above-mentioned fifteenth aspect, the loudspeaker system of the prevent invention can operate as a bass-reflex-type loudspeaker system which is one of the phase inversion type systems.

According to the above-mentioned seventeenth aspect, owing to the diaphragm which is disposed so as to be sandwiched between the internal space and the voice coil, the powdery gas absorption material does not contact the voice coil, thereby preventing abnormal sound and a failure due to an electrical short circuit, which are caused when the gas absorption material contacts the voice coil.

According to the above-mentioned eighteenth aspect, owing to the second blocking member, the gas absorption material does not flows into the speaker unit, thereby preventing abnormal sound which is caused when the gas absorption material contacts the diaphragm or the like.

BRIEF DESCRIPTION OF THE DRAWINGS

[FIG. 1] FIG. 1 is a tectonicprofile showing one example of the loudspeaker system according to a first embodiment.

[FIG. 2] FIG. 2 is a diagram showing acoustic pressure frequency characteristics and electrical impedance characteristics in a closed-type system.

[FIG. 3] FIG. 3 is a diagram showing a relationship between an average particle diameter of a gas absorption material 12 and a volume expansion ratio.

[FIG. 4] FIG. 4 is a tectonic profile illustrating one example of a loudspeaker system according to a second embodiment.

[FIG. 5] FIG. 5 is a diagram showing acoustic pressure frequency characteristics and electrical impedance characteristics in a passive radiator type system.

[FIG. 6] FIG. 6 is a diagram showing a view in which openings 22h are formed on a partition plate 22.

[FIG. 7] FIG. 7 is a diagram illustrating a sectional side view and a rear view, a part of which is a sectional view, of one example of a loudspeaker system according to a third embodiment.

[FIG. 8] FIG. 8 is a diagram showing an influence that a value of a specific acoustic resistance Rs exerts on the acoustic pressure frequency characteristics.

[FIG. 9] FIG. 9 is a diagram illustrating a sectional side view and a rear view, a part of which is a sectional view, of one example in which blocking members 33 are disposed inside of a cabinet 30.

[FIG. 10] FIG. 10 is a diagram illustrating an oblique perspective view of the blocking member 33.

[FIG. 11A] FIG. 11A is a diagram illustrating a front view of a mobile phone in which the loudspeaker system of the present invention is mounted.

[FIG. 11B] FIG. 11B is a diagram illustrating a side view of the mobile phone shown in FIG. 11A.

[FIG. 11C] FIG. 11C is a diagram illustrating a rear view of the mobile phone shown in FIG. 11A.

[FIG. 12] FIG. 12 is a diagram illustrating a sectional view of the mobile phone along a line A-B shown in FIG. 11A.

[FIG. 13] FIG. 13 is a diagram showing a result obtained when amplitude characteristics of a diaphragm 56 in a speaker unit 50 are measured on a loudspeaker system 43 shown in FIG. 13, FIGs. 11A to 11C, and FIG. 12.

[FIG. 14] FIG. 14 is a diagram illustrating one example in which the loudspeaker system of the present invention is mounted in a door of a car.

[FIG. 15] FIG. 15 is a diagram illustrating one example of a loudspeaker system mounted inside of a car.

[FIG. 16] FIG. 16 is a diagram illustrating another example of a loudspeaker system mounted inside of a car.

[FIG. 17] FIG. 17 is a diagram illustrating a configuration of one example in which the loudspeaker system is mounted in a thin-shaped television.

[FIG. 18] FIG. 18 is a tectonic profile of a major portion of a conventional loudspeaker system.

[FIG. 19] FIG. 19 is a schematic diagram illustrating a structure of fine pores formed in a granular activated carbon.

DESCRIPTION OF THE REFERENCE CHARACTERS

| | |
|---|---|
| 10, 20, 30, 65, 73 | cabinet |
| 11, 50, 62, 74 | speaker unit |
| 12 | gas absorption material |
| 13 33 | blocking member |

| 21 | passive radiator |
| 211, 56 | diaphragm |
| 212 | suspension |
| 32 | segmentation arrangement mechanism |
| 321 | first structural plate |
| 322 | second structural plate |
| 323 | coupling plate |
| 331 | housing |
| 332 | film |
| 40 | mobile phone |
| 41 | main body case |
| 42 | liquid crystal display |
| 44 | antenna |
| 45 | hinge section |
| 51 | frame |
| 52 | yoke |
| 53 | magnet |
| 54 | plate |
| 55 | voice coil |
| 57 | gasket |
| 58 | shielding mesh |
| 60 | window section |
| 61 | door main body |
| 63 | seat |
| 66 | plinth |
| 67 | punching net |
| 70 | thin-shaped television |
| 71 | display |
| 100 | macropores |
| 101 | micropores |

BEST MODE FOR CARRYING OUT THE INVENTION

(First Embodiment)

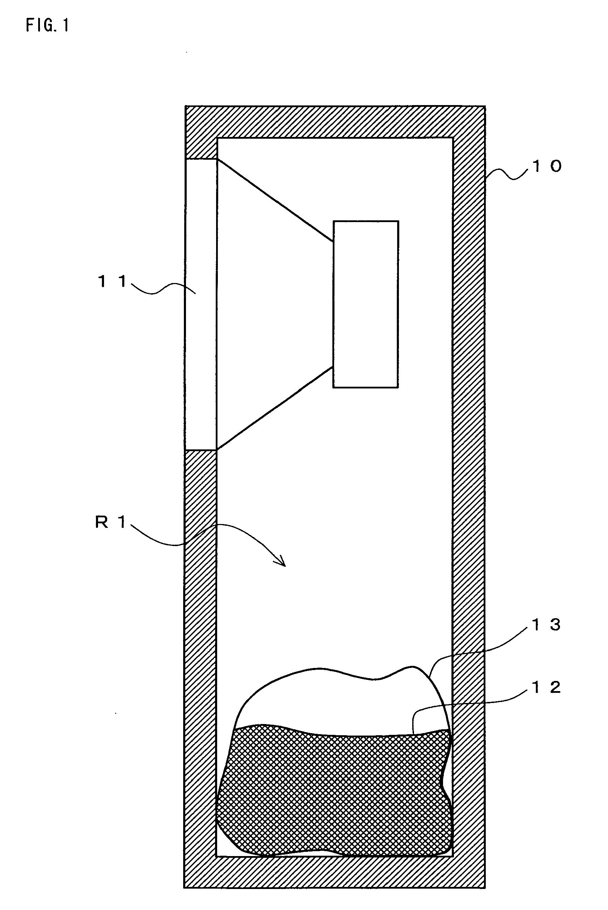

Referring to FIG. 1, a loudspeaker system according to a first embodiment of the present invention will be described. FIG. 1 is a tectonic profile showing one example of the loudspeaker system according to the first embodiment. In FIG. 1, the loudspeaker system comprises a cabinet 10, a speaker unit 11, a gas absorption material 12, and a blocking member 13. The loudspeaker system shown in FIG. 1 is a closed-type loudspeaker system.

The speaker unit 11 is, for example, an electrodynamic-type speaker. The speaker unit 11 is mounted at an opening formed on an upper portion of a front face of the cabinet 10. The gas absorption material 12 is powdery activated carbon with an average particle diameter of 0.01 to 0.03 mm (hereinafter, referred to as powdery activated carbon). The above-mentioned powdery activated carbon is produced by crushing activated carbon, which is made from a plant-derived material, for example, coconut husks, so as to be in a powdery state with an average particle diameter of 0.01 to 0.03 mm. The blocking member 13 is a member through which gas does not pass. The blocking member 13 is formed, for example, in a bag-like shape. The blocking member 13 is made of, for example, a thin film. A thickness of the thin film is, for example, 0.05mm. As a material of the thin film, for example, polyvinyl chloride, polyvinylidene chloride, or the like is used. The gas absorption material 12 is sealed and packaged, containing air, by the blocking member 13, and disposed inside of the cabinet 10. As mentioned above, the gas absorption material 12 is disposed inside of the cabinet 10 in a state where the blocking member 13 shuts off outside air. A space of the cabinet 10, which is other than a space of the speaker unit 11, the gas absorption material 12, and the blocking member 13, is referred to as a room R1.

Next, operations of the loudspeaker system according to the present embodiment will be described. The speaker unit 11 is an electrodynamic-type speaker and when an electrical signal is applied, driving power is generated in a voice coil. This driving power vibrates a diaphragm of the speaker unit 11 and an acoustic pressure is generated on front and rear faces of the diaphragm. The acoustic pressure generated from the rear face of the diaphragm changes a pressure in the room R1 formed inside of the cabinet 10. This pressure change causes split vibration of a surface of the blocking member 13 which seals the gas absorption material 12. Thereupon, a pressure inside of the blocking member 13 changes. Inside of the blocking member 13, the gas absorption material 12 is disposed. Accordingly, due to an effect that the gas absorption material 12 physically absorbs gas, a change in a pressure inside of the blocking member 13 is suppressed. As a result, the pressure change in the room R1 is suppressed and a volume of the cabinet 10 is expanded in an equivalent manner. As a result, in the loudspeaker system according to the present embodiment, even with a cabinet being small-sized, bass reproduction which could be realized if the speaker unit 11 were mounted in a large cabinet is enabled.

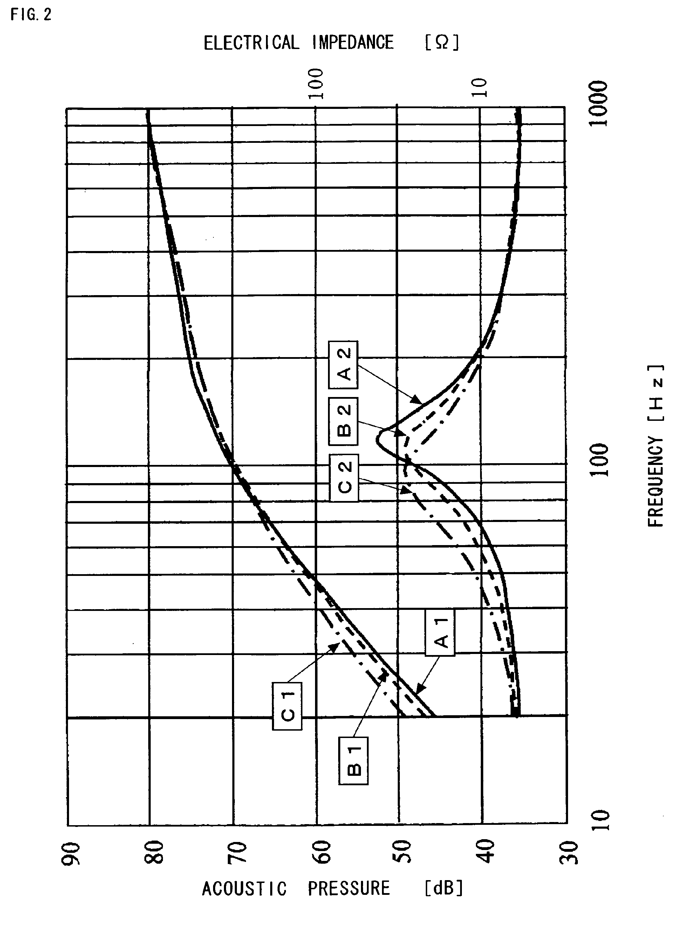

Here, an effect obtained when the powdery activated carbon with the average particle diameter of 0.01 to 0.03 mm is used is shown in FIG. 2. FIG. 2 is a diagram showing acoustic pressure frequency characteristics and electrical impedance characteristics in a closed-type system. Specifically, in FIG. 2, the acoustic pressure frequency characteristics and the electrical impedance characteristics are shown, respectively, in a case where a speaker unit having a bore of 8 cm is mounted in a cabinet, having an internal volume of 0.5 liter, in which nothing is contained; a case where a conventional granular activated carbon with an average grain diameter of 0.1 to 0.3 mm is contained; and a case where the above-mentioned powdery activated carbon is contained as the gas absorption material 12.

In FIG. 2, a graph A1 shows the acoustic pressure frequency characteristics in the case where nothing is contained in the cabinet. A graph A2 shows the electrical impedance characteristics under conditions in the graph A1. A graph B1 shows the acoustic pressure frequency characteristics in the case where 40 g of the conventional granular activated carbon (average grain diameter: 0.1 to 0.3 mm, specific surface area: 1000 $m^2$/g) is contained. A graph B2 shows the electrical impedance characteristics under conditions in the graph B1. A graph C1 shows the acoustic pressure frequency characteristics in the case where 40 g of the powdery activated carbon (average particle diameter: 0.01 to 0.03 mm, specific surface area 1700 $m^2$/g) is contained. A graph C2 shows the electrical impedance characteristics under conditions in the graph C1.

In the graph A2, a resonance frequency in the case where nothing is contained in the cabinet is $f_{0A}$ = 121. 3 Hz. In the graph B2, a resonance frequency in the case where the conventional granular activated carbon is contained is $f_{0B}$ = 107.1 Hz. In the graph C2, a resonance frequency in the case where the powdery activated carbon in the present embodiment is contained is $f_{0C}$ = 94.5 Hz. Here, a resonance frequency in the case where the bore of the speaker unit, as mentioned above, is 8 cm is supposed to be $f_{0C}$ = 70 Hz. Thereupon, a volume expansion ratio of the cabinet in the case where the conventional granular activated carbon is contained is the following value.

$$\{(f_{0A}/f_{0S})^2 - 1\}/\{(f_{0B}/f_{0S})^2 - 1\} = 1.49$$

On the other hand, a volume expansion ratio of the cabinet in the case where the powdery activated carbon is contained is the following value.

$$\{(f_{0A}/f_{0S})^2 - 1\}/\{(f_{0C}/f_{0S})^2 - 1\} = 2.43$$

As shown above, the volume expansion ratio in the case where the powdery activated carbon is contained is larger than that in the case where the conventional granular activated carbon is contained. Thus, as shown in FIG. 2, in a low frequency band of less than or equal to 80 Hz, an acoustic pressure level in the graph C1 is higher than that in the graph B1. Also it is understood that the acoustic pressure level in the graph C1 is improved by approximately 2. 5 dB with respect to the acoustic pressure in the graph A1. The reason why the volume expansion ratio in the case where the powdery activated carbon is contained is larger than that in the case where the conventional granular activated carbon is contained is that in the powdery activated carbon, a ratio of a volume which the micropores 101 shown in FIG. 18 occupy is large. The powdery activated carbon is produced through crushing into further finer particles than the grains of the conventional granular activated carbon. In other words, crushing in a fine manner breaks the macropores 100. Thus, in the powdery activated carbon, a ratio of a volume of the macropores 100 is decreased, whereby the ratio of the volume of the micropores 101 is large as compared with that of the conventional granular activated carbon.

As described above, by using the powdery activated carbon as the gas absorption material 12, the effect of physically absorbing gas is improved as compared with that obtained by the conventional granular activated carbon, expanding a virtually functional volume of the cabinet by 2.43 times, increased from 1.49 times which is obtained by the conventional granular activated carbon. As a result, when a volume of the gas absorption material 12 is the same as that of the conventional one, the low frequency band can be further expanded as compared with the conventional one. And when an expanded width of the low frequency band is the same as that of the conventional one, a volume of the gas absorption material 12 itself can be reduced as compared with the conventional one. As a result, the loudspeaker system can be smaller than the conventional one.

The above-mentioned powdery activated carbon has a smaller ratio of a volume of the macropores 100 than that of the conventional granular activated carbon. Accordingly, by using the above-mentioned powdery activated carbon as the gas absorption material 12, a reduction in an acoustic pressure level, which is caused by the macropores 100, can be suppressed as compared with the conventional granular activated carbon.

In the above description, the gas absorption material 12 is the powdery activated carbon with the average particle diameter of 0.01 to 0. 03 mm. Here, a material of the gas absorption material 12 is not limited to the activated carbon and other porous material having the physical absorption effect may be used. Examples of the other porous material are zeolite, silica ($SiO_2$), alumina ($Al_2O_3$), zirconia ($ZrO_3$), magnesia (MgO), ferrosoferric oxide ($Fe_3O_4$), molecular sieve, etc.

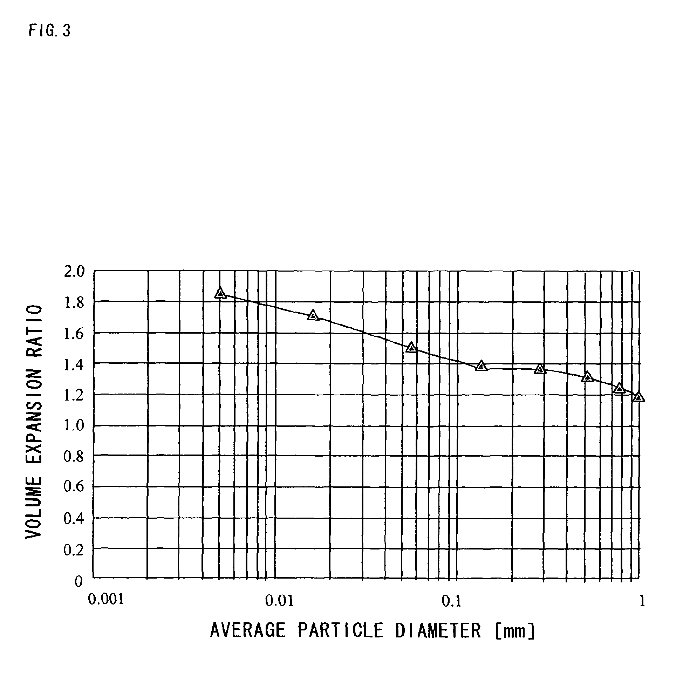

The average particle diameter of the gas absorption material 12 is not limited to 0.01 to 0.03 mm. It is only required that the average particle diameter of the gas absorption material 12 is less than 0.1 mm. Here, referring to FIG. 3, the reason why the average particle diameter of the gas absorption material 12 in the present invention is less than 0.1 mm will be explained. FIG. 3 is a diagram showing a relationship between the average particle diameter of the gas absorption material 12 and the volume expansion ratio. In FIG. 3, a case where activated carbon is used as a material of the gas absorption material 12 is shown. Also in FIG. 3, the activated carbon is disposed inside of a closed-type cabinet having an internal volume of 0.5 L, and an acoustic impedance inside of the cabinet containing the activated carbon with varied average particle diameters is measured. And based on the measured acoustic impedance, a change in a virtually functional volume inside of the cabinet is obtained as a volume expansion ratio with reference to a virtually functional volume obtained in a case where the activated carbon is not contained. Also in FIG. 2, the volume expansion ratio is obtained respectively in a case where the average particle diameter of the activated carbon is 0.005 mm; where the average particle diameter of the activated carbon is 0.016 mm; where the average particle diameter of the activated carbon is 0.056 mm; where the average particle diameter of the activated carbon is 0.136 mm; where the average particle diameter of the activated carbon is 0.280 mm; where the average particle diameter of the activated carbon is 0.510 mm; where the average particle diameter of the activated carbon is 0.780 mm; or where the average particle diameter of the activated carbon is 1.0 mm. A weight of the activated carbon with each of the average particle diameters is all 40g.

As shown in FIG. 3, in a range in which the average particle diameter is greater than or equal to 0.3 mm, the volume expansion ratio increases in accordance with a decrease in the average particle diameter. In a range in which the average particle diameter is approximately 0.1 to 0. 3 mm, the volume expansion ratio is substantially constant, which is approximately 1.4-fold. However, in a range in which the average particle diameter is less than approximately 0.1 mm, with a threshold being approximately 0.1 mm, the volume expansion ratio increases again in accordance with a decrease in the average particle diameter. Although FIG. 3 shows nothing in a range in which the average particle diameter is less than or equal to 0.005 mm, as indicated by a curve shown in a range in which the average particle diameter is 0.1 to 0.005 mm, it is expected that the volume expansion ratio would further increase. As mentioned above, it is understood that the volume expansion ratio markedly increases in the range in which the average particle diameter is less than 0.1 mm. Therefore, the present invention focuses attention on the results that the volume ratio of the micropores 101 increases and the volume expansion ratio increases in accordance with a decrease in the average particle diameter and that the volume expansion ratio markedly increases in the range in which the average particle diameter is less than 0.1 mm, making the average particle diameter of the gas absorption material 12 being less than 0.1 mm. Thus, in a case where the gas absorption material 12 in the present invention has the same volume as that of the conventional granular activated carbon (average particle diameter: 0.1 to 0.3 mm), a great volume expansion effect than that of the conventional one can be obtained. As a result, the low frequency band can be further expanded. In a case where the same width of the low frequency band as that of the conventional granular activated carbon is expanded, a volume of the gas absorption material 12 itself can be reduced. As a result, the loudspeaker system can be further downsized as compared with the conventional one. Accordingly, in the present invention, the powdery porous material with the average particle diameter of less than 0.1 mm is used as the gas absorption material 12.

The above-mentioned average particle diameter is an average of diameters of particles (particle diameter). It is only required that the average particle diameter of the gas absorption material 12 is less than 0.1 mm and it is allowed that particles whose diameters are greater than or equal to 0.1 mm are contained. Also, it is only required that the average particle diameter of the gas absorption material 12 is less than 0.1 mm and it is allowed that only particles whose diameters are less than 0.1 mm, which are obtained by using, for example, a sieve, are contained. Thus, the volume expansion effect can be obtained in a more ensured manner. In a case where distribution of dispersion of particle diameters is close to normal distribution, a median value of the distribution may be used as an average particle diameter. For example, in a case where when using powdery activated carbon with an average particle diameter of 0.056 mm, distribution of dispersion of diameters of particles contained therein is close to normal distribution with a median value of 0.056 mm, a particle diameter of the median value may be used as an average particle diameter.

As a problem in practical use, when the average particle diameter is less than or equal to 0.005 mm, effects on the human body such as pneumoconiosis is concerned. Therefore, in order to prevent the scattering of the particles of the gas absorption material 12 with the average particle diameter of less than or equal to 0. 005 mm, caution should be exercised when manufacturing the loudspeaker system. Although it is described that when the powdery activated carbon is used as the gas absorption material 12, the powdery activated carbon is made from the coconut husks, the present invention is not limited thereto. The powdery activated carbon may be made, for example, from a petroleum resin material, which is made from petroleum, such as phenol resin, from coal, etc.

In the above description, the gas absorption material 12 is packaged by the blocking member 13. This is to prevent a reduction in the effect of physically absorbing gas, which is caused when the micropores 101 of the porous material of the gas absorption material 12 absorb moisture, toxic gas, cigarette smoke, odor, and the like in external air. As described above, by using the blocking member 13, the gas absorption material 12 can exhibit the volume expansion effect for a long term. Also by using the blocking member 13, the scattering of the powdery gas absorption material 12 can be prevented. Thus, in a case where the powdery activated carbon with the average particle diameter of greater than or equal to 0.005 mm is used as a gas absorption material, a burden required when the caution concerning the effects on the human body such as pneumoconiosis is exercised can be alleviated. When this effect is not expected, in the present invention, the blocking member 13 may not be used. Also in the present embodiment, the cabinet 10 is the closed-type cabinet. Therefore, if the blocking member 13 is not used, the gas absorption material 12 can exhibit the volume expansion effect for a long term.

(Second Embodiment)

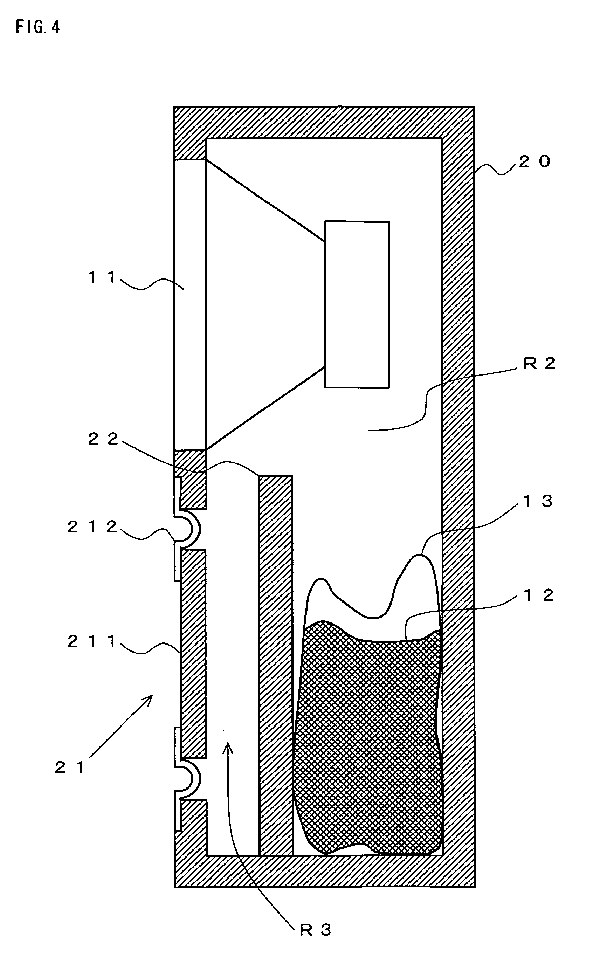

Referring to FIG. 4, a loudspeaker system according to a second embodiment of the present invention will be described. FIG. 4 is a tectonic profile illustrating one example of the loudspeaker system according to the second embodiment. The loudspeaker system according to the present embodiment is different from the loudspeaker system according to the first embodiment in that the loudspeaker system according to the second embodiment, which includes a passive radiator 21, is the so-called phase-inversion-type loudspeaker system. Hereinunder, different points will be mainly described.

In FIG. 4, the loudspeaker system comprises a cabinet 20, a speaker unit 11, a gas absorption material 12, a blocking member 13, the passive radiator 21, and a partition plate 22. Since the speaker unit 11, the gas absorption material 12, and the blocking member 13 shown in FIG. 4 are the same as those in the above-described first embodiment, the same numerals are used and descriptions thereof will be omitted.

The speaker unit 11 is mounted at an opening formed on an upper portion of a front face of the cabinet 20. The passive radiator 21 includes a diaphragm 211 and a suspension 212. The passive radiator 21 is mounted at an opening formed on a lower portion of the front face of the cabinet 20. The diaphragm 211 is, for example, a disc-shapedmember. An inner peripheral portion of the suspension 212 is fixed on an outer peripheral portion of the diaphragm 211. An outer peripheral portion of the suspension 212 is fixed at the opening formed on the lower portion of the front face of the cabinet 20. As mentioned above, the suspension 212 supports the diaphragm 211 so that the diaphragm 211 can vibrate in front and rear face directions. The gas absorption material 12 is sealed, containing air, by the blocking member 13 and disposed inside of the cabinet 10. Here, a space which is an internal space of the cabinet 20 between a rear face of the speaker unit 11 and an upper portion of the blocking member 13 and the gas absorption material 12 is referred to as a room R2. The partition plate 22 is a plate-like member. The partition plate 22 is fixed at a position where the passive radiator 21 and the gas absorption material 12 are partitioned inside of the cabinet 20. The partition plate 22 is fixed so as to form a room R3 between the partition plate 22 and the passive radiator 21. Forming this room R3 can prevent the passive radiator 21 from contacting the gas absorption material 12. The rooms R2 and R3 are coupled.

Next, operations of the loudspeaker system according to the present embodiment will be described. The speaker unit 11 is an electrodynamic-type speaker and when an electrical signal is applied, driving power is generated in a voice coil. This driving power vibrates a diaphragm of the speaker unit 11 and an acoustic pressure is generated on front and rear faces of the diaphragm. The acoustic pressure generated from the rear face of the diaphragm changes a pressure in the rooms R2 and R3 formed inside of the cabinet 20. This pressure change causes split vibration of a surface of the blocking member 13 which seals the gas absorption material 12. Thereupon, a pressure inside of the blocking member 13 changes. Inside of the blocking member 13, the gas absorption material 12 is disposed. Accordingly, owing to an effect that the gas absorption material 12 physically absorbs gas, a change in a pressure inside of the blocking member 13 is suppressed. As a result, the pressure change in the rooms R2 and R3 is suppressed and a volume of the cabinet 20 is expanded in an equivalent manner.

Here, in the present embodiment, the passive radiator 21 is mounted at an opening formed at a lower portion of the rear face of the cabinet 20. This passive radiator 21 is acoustically coupled via the room R3 to the room R2. Therefore, the passive radiator 21 is driven by vibration of the speaker unit 11. Thus, the loudspeaker system according to the present embodiment operates as a passive radiator type loudspeaker system, which is one of the phase inversion-type systems.

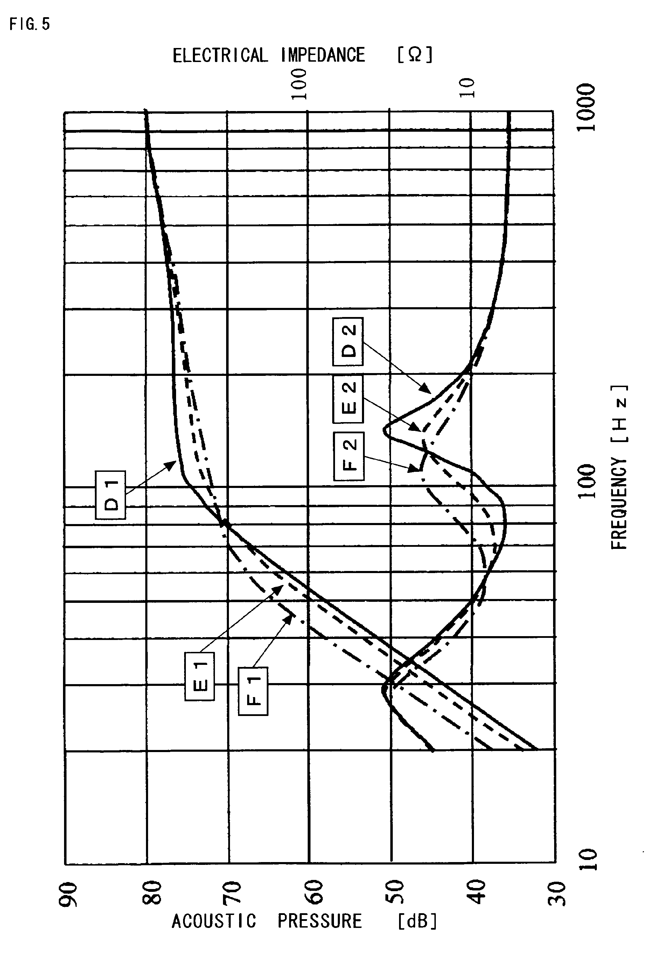

Here, in the passive radiator type system, an effect obtained by using, as the gas absorption material 12, powdery activated carbon with an average particle diameter of 0.01 to 0.03 mm is shown in FIG. 5. FIG. 5 is a diagram showing acoustic pressure frequency characteristics and electrical impedance characteristics in the passive radiator type system. Specifically, in FIG. 5, the acoustic pressure frequency characteristics and the electrical impedance characteristics are shown, respectively, in a case where a speaker unit having a bore of 8 cm and a passive radiator having a bore of 8 cm are mounted in a cabinet, having an internal volume of 0.5 liter, in which nothing is contained; a case where the conventional granular activated carbon with an average grain diameter of 0.1 to 0.3 mm is contained; and a case where the above-mentioned powdery activated carbon is contained as the gas absorption material 12.

In FIG. 5, a graph D1 shows the acoustic pressure frequency characteristics in the case where nothing is contained in the cabinet. A graph D2 shows the electrical impedance characteristics under conditions in the graph D1. A graph E1 shows the acoustic pressure frequency characteristics in the case where 40 g of the conventional granular activated carbon (average grain diameter: 0.1 to 0.3 mm, specific surface area: 1000 $m^2$/g) is contained. A graph E2 shows the electrical impedance characteristics under conditions in the graph E1. A graph F1 shows the acoustic pressure frequency characteristics in the case where 40 g of the powdery activated carbon (average particle diameter: 0.01 to 0.03 mm, specific surface area 1700 $m^2$/g) is contained. A graph F2 shows the electrical impedance characteristics under conditions in the graph F1.

Here, with reference to the graphs D1, E1, and F1, respective acoustic pressures obtained when a frequency is 50 Hz are compared. The acoustic pressure level in the case where nothing is contained, as shown in the graph D1, is 58.1 dB. The acoustic pressure level in the case where the conventional granular activated carbon is contained, as shown in the graph E1, is 59.9 dB. The acoustic pressure level in the case where the powdery activated carbon of the present embodiment is contained, as shown in the graph F1, is 64.2 dB. In other words, with reference to the acoustic pressure level in the case where nothing is contained, the acoustic pressure level in the case where the conventional granular activated carbon is contained is improved by approximately 2 dB. By contrast, the powdery activated carbon of the present embodiment can improve the acoustic pressure level by approximately 6 dB. In the loudspeaker system of the present embodiment, the acoustic pressure level obtained when the frequency is 50 Hz is approximately 3.5 dB higher than that in the closed-type loudspeaker system according to the first embodiment shown in FIG. 2.

As described above, the loudspeaker system according to the present embodiment, because of the points that the volume expansion effect attained by the gas absorption material 12 can be obtained and that the loudspeaker system operates as the passive radiator type system, can further greatly improve the acoustic pressure level of the low frequency band with respect to that obtained by the conventional one, as compared with the closed-type loudspeaker system according to the first embodiment.

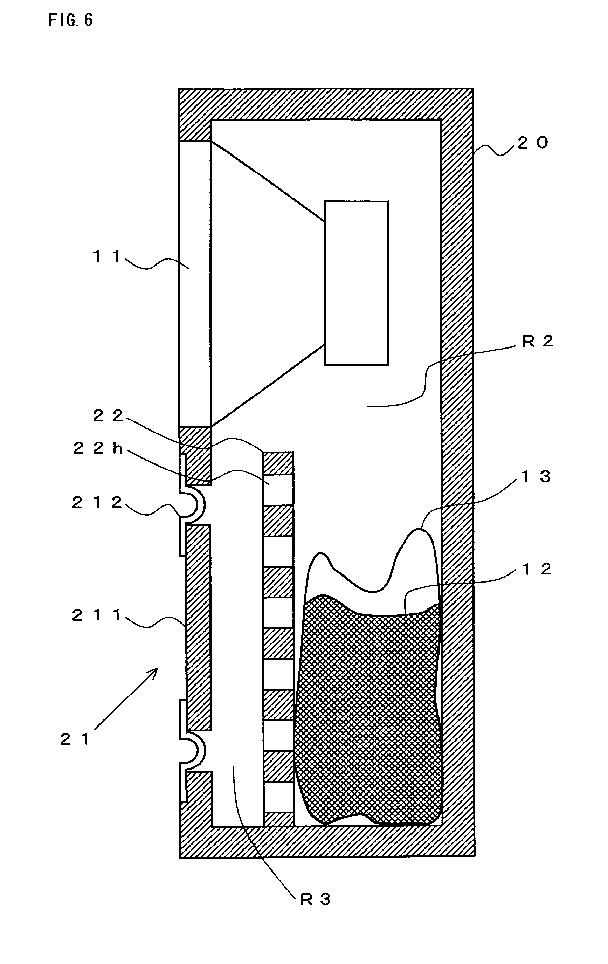

On the above-mentioned partition plate 22, as shown in FIG. 6, openings 22h may be formed. FIG. 6 is a diagram showing a view in which the openings 22h are formed on the partition plate 22. In the partition plate 22, the openings 22h are formed in a direction from the passive radiator 21 toward the gas absorption material 12. Thus, a pressure change in the room R3, which is induced by the vibration of the passive radiator 21, can be easily transmitted to the gas absorption material 12. As a result, the acoustic pressure level of the low frequency band is further improved as compared with a case where the openings 22h are not formed.

(Third Embodiment)

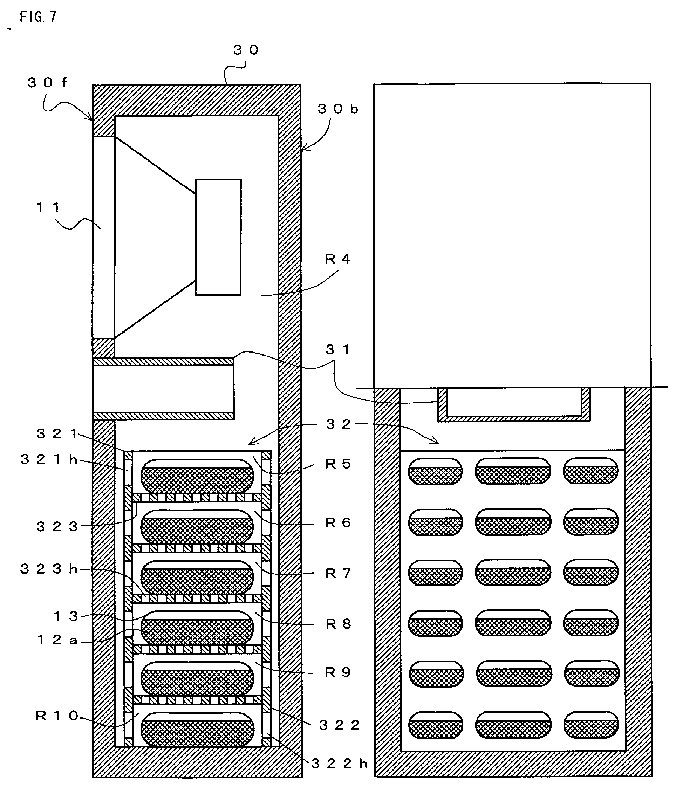

Referring to FIG. 7, a loudspeaker system according to a third embodiment of the present invention will be described. FIG. 7 is a diagram illustrating a sectional side view and a rear view, a part of which is a sectional view, of one example of the loudspeaker system according to the third embodiment. The loudspeaker systemaccording to the present embodiment is different from the loudspeaker system according to the first embodiment in that the loudspeaker system according to the third embodiment, which includes an acoustic port 31, is the so-called phase inversion type system. Also the loudspeaker system according to the present embodiment is different from the loudspeaker system according to the first embodiment in that the loudspeaker system according to the third embodiment further includes a segmentation arrangement mechanism 32 in which a gas absorption material 12 is arranged so as to be segmented.

In FIG. 7, the loudspeaker system comprises, a cabinet 30, a speaker unit 11, a gas absorption material 12a, a blocking member 13, the acoustic port 31, and the segmentation arrangement mechanism 32. The speaker unit 11 and the blocking member 13 shown in FIG. 7 are the same as those in the above-described first embodiment. The same numerals are used and descriptions thereof will be omitted. The gas absorption material 12 in the above-described embodiment is divided into six segments, which is the gas absorption material 12a. A space inside of the cabinet 30 is referred to as a room R4.

The speaker unit 11 is mounted at an opening formed on an upper portion of a front face plate 30f of the cabinet 30. The acoustic port 31 is mounted at an opening formed on a middle portion of the front face plate 30f of the cabinet 30.

The segmentation arrangement mechanism 32 is disposed inside of the cabinet 30. The segmentation arrangement mechanism 32 includes a first structural plate 321, a second structural plate 322, and coupling plates 323. The first structural plate 321 is disposed at a position where the first structural plate 321 faces the front face plate 30f of the cabinet 30 with a space sandwiched therebetween. The second structural plate 322 is disposed at a position where the second structural plate 322 faces the rear face plate 30b of the cabinet 30 with the space sandwiched therebetween.

The coupling plates 323 couple the first structural plate 321 and the second structural plate 322 and form rooms R5 to R10 in the segmentation arrangement mechanism 32. On the first structural plate 321, a plurality of openings 321h are formed. On the second structural plate 322, a plurality of openings 322h are formed. On the coupling plate 323, a plurality of openings 323h are formed. Each of the gas absorption materials 12a is, containing air, packaged by the blocking member 13. Each of the gas absorption materials 12a is disposed in each of the rooms R5 to R10 in the segmentation arrangement mechanism 32.

As mentioned above, each of the gas absorption materials 12a and each of the blocking member 13 are disposed inside of the cabinet 30 so as to form a space between each other. In other words, the above-mentioned segmentation arrangement mechanism 32 has a plurality of housings (six housings in FIG. 7), in each of which each of the rooms R5 to R10 is formed, with an opening formed in at least one part of each of the housings. Inside of each of the housings, the gas absorption material 12a and the blocking member 13 are disposed.

Next, operations of the loudspeaker system according to the present embodiment will be described. The speaker unit 11 is an electrodynamic-type speaker and when an electrical signal is applied, driving power is generated in a voice coil. This driving power vibrates a diaphragm of the speaker unit 11 and an acoustic pressure is generated on front and rear faces of the diaphragm. The acoustic pressure generated from the rear face of the diaphragm changes a pressure in the room R4 formed inside of the cabinet 30. The above-mentioned operations are the same as those of the first embodiment. Here, in the present embodiment, the acoustic port 31 is provided. Owing to this acoustic port 31, the loudspeaker system according to the present embodiment operates as a bass-reflex-type loudspeaker system which is one of the phase inversion type systems.

Further, a point that the loudspeaker system of the present embodiment is greatly different from those of the first and second embodiments is that the segmented gas absorption materials 12a are disposed by using the segmentation arrangement mechanism 32. After the acoustic pressure generated from the rear face of the diaphragm of the speaker unit 11 is transmitted to the room R4, the acoustic pressure passes through the openings 321h and 322h formed on the first structural plate 321 and the second structural plate 322 and is transmitted to the rooms R5 to R10. The acoustic pressure transmitted to the rooms R6 to R10 passes through the openings 323h formed on the coupling plate 323 and is also transmitted to a bottom face of the blocking member 13 contacting the coupling plate 323.

Owing to this pressure change in the rooms R5 to R10, a surface of each of the blocking members 13 sealing each of the gas absorption materials 12a vibrates in a split-manner. Thereupon, a pressure inside of each of the blocking members 13 changes. Inside of each of the blocking member 13, each of the gas absorption materials 12a is disposed. Accordingly, due to an effect that the gas absorption material 12a physically absorbs gas, a change in a pressure inside of the blocking member 13 is suppressed. As a result, the pressure change in the rooms R5 to R10 is suppressed, which results in a suppression of a pressure change in the room R4, and thereby, a volume of the cabinet 20 is expanded in an equivalent manner.

The above-mentioned volume expansion effect is the same as those in the first and second embodiments. However, in the present embodiment, the gas absorption materials 12a into which the gas absorption material 12 is segmented are used. Here, the gas absorption material 12 is powdery as described above. Accordingly, in a case where the gas absorption material 12 is packaged by one blocking member 13 and used as in the first and second embodiments, in a process in which gas reaches the inside of the gas absorption material 12, gas is to pass through interstices between innumerable particles. The powdery gas absorption material 12 collects on the bottom face of the blocking member 13 in a block-like manner due to gravity. Owing to this, not a little acoustic resistance is present in the gas absorption material 12 itself and it is considered that a reduction in an acoustic pressure level of a low frequency band is caused by the acoustic resistance. Because of this, in the present embodiment, the gas absorption materials 12a into which the gas absorption material 12 is segmented are disposed so as to each form a space between the gas absorption materials 12a. Thus, each of the gas absorption materials 12a does not collect inside of the blocking member 13 and the gas absorption materials 12a are maintained in a dispersed state. Also, a length of a passageway through which gas reaches each of the gas absorption materials 12a is substantially reduced. Also, an area contacting the gas in each of the blocking member 13 is increased. Owing to these, according to the present embodiment, the acoustic resistance of the gas absorption material 12 can be reduced and the acoustic pressure level of the low frequency band can be further improved as compare with the first and second embodiments.

Here, a value of the acoustic resistance of the above-described gas absorption material 112 it self will be described. In a measuring method, an acoustic tube is mounted, instead of the speaker unit 11, in the configuration shown in FIG. 7. At a mouth of the acoustic tube, a speaker for driving is attached. Sound emitted from the speaker is measured by a microphone and a value with which distribution of acoustic pressures inside of the acoustic tube changes is obtained, thereby obtaining the value of the acoustic resistance of the gas absorption material 12 itself. Here, the value of the acoustic resistance is expressed as Ra. The acoustic resistance Ra in the second embodiment and the acoustic resistance Ra in the third embodiment are compared through obtaining respective specific acoustic resistance Rs. The specific acoustic resistance Rs is expressed by the following equation.

$$Rs = Ra/(Sp * \rho * c)$$

Note that Sp is a cross-sectional area of the acoustic tube, p is an air density, and c is an acoustic velocity. When a specific acoustic resistance Rs is calculated using this equation, the specific acoustic resistance Rs in the second embodiment is 0.5. On the other hand, the specific acoustic resistance Rs in the third embodiment is 0.2, which is low.

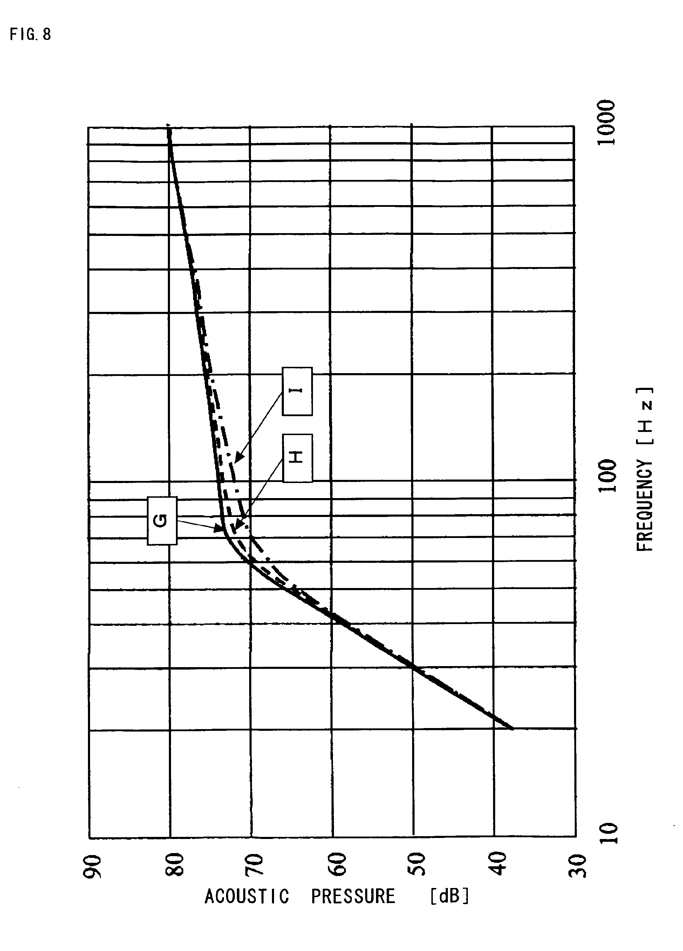

Referring to FIG. 8, an influence that the value of the specific acoustic resistance Rs exerts on acoustic pressure frequency characteristics will be described. FIG. 8 is a diagram showing the influence that the value of the specific acoustic resistance Rs exerts on the acoustic pressure frequency characteristics. In FIG. 8, a bass-reflex-type loudspeaker system in which a speaker unit having a bore of 8 cm is mounted in a cabinet having an internal volume of 0.5 liter is assumed. The acoustic pressure frequency characteristics are compared in three cases: where inside of the cabinet, 40g of the powdery activated carbon is contained as the gas absorption material 12 in one blocking member 13 (in a case of the specific acoustic resistance Rs = 0.5) ; where 40g of the powdery activated carbon is contained in six gas absorption materials 12a (in a case of the specific acoustic resistance Rs = 0. 2) ; and where it is assumed that the cabinet has a 1.8-fold virtually functional volume and an acoustic resistance is zero.

In FIG. 8, a graph G shows the acoustic pressure frequency characteristics in the case where it is assumed that the acoustic resistance is zero; a graph H shows the acoustic pressure frequency characteristics in the case of the specific acoustic resistance Rs = 0.2; and a graph I shows the acoustic pressure frequency characteristics in the case of the specific acoustic resistance Rs = 0.5.

In FIG. 8, acoustic pressure levels obtained when a frequency is 70 Hz are compared. In the graph G, the acoustic pressure level in the case where it is assumed that the acoustic resistance is zero is 72.4 dB. In the graph H, the acoustic pressure level in the case of the specific acoustic resistance Rs = 0.2 is 71.4 dB. In the graph H, the acoustic pressure level in the case of the specific acoustic resistance Rs = 0.5 is 69.6 dB. As mentioned above, by disposing the gas absorption material 12 in a segmented manner, the acoustic pressure level can be improved by 1.8 dB as compared with the case where the gas absorption material 12 is not segmented. Also it can be said that when the acoustic pressure level in the case where the gas absorption material 12 is disposed in a segmented manner (in the case of the specific acoustic resistance Rs = 0.2) is compared with the acoustic pressure level in the case where it is assumed that the acoustic resistance is zero, a difference of approximately 1 dB which accrues is slight.

As described above, according to the present embodiment, the acoustic resistance of the gas absorption material 12 can be reduced and the acoustic pressure level of the low frequency band can be further improved as compared with the above-described first and second embodiments.

Even if the conventional granular activated carbon is disposed in a segmented manner as in the present embodiment, the similar effect obtained by the present embodiment cannot be attained. This is because it is difficult to intrinsically reduce the acoustic resistance since the conventional granular activated carbon has a large number of the macropores 100 and the acoustic resistance caused by the macropores 100 is large. By contrast, in the present invention, the powderty gas absorption material 12 (for example, the powdery activated carbon) whose acoustic resistance, which is caused by the macropores 100, is low is used. Further in the present embodiment, by disposing the gas absorption material 12 in a segmentedmanner, a length of the passageway through which the gas reaches the inside of the gas absorption material 12 is shortened. These conditions allow the acoustic resistance to be sufficiently reduced.

Although in the above description, the number of the gas absorption materials 12a is six, the present invention is not limited thereto. When the gas absorption material 12 in the above-described first and second embodiments is divided into at least two segments, the effect of the present embodiment can be exhibited. Accordingly, a structure of the segmentation arrangement mechanism 32 may have two or more spaces.

Although in the above description, as shown in FIG. 7, the example in which by using the segmentation arrangement mechanism 32, the gas absorption materials 12a segmented by the blocking members 13 are stacked in a vertical direction is described, the present invention is not limited thereto. It is only required that the gas absorption materials 12a and the blocking members 13 are disposed inside of the cabinet 30 so as to respectively form spaces between the gas absorption materials 12a and the blocking members 13, and the gas absorption materials 12a and the blocking members 13 may be stacked in, for example, a horizontal direction.

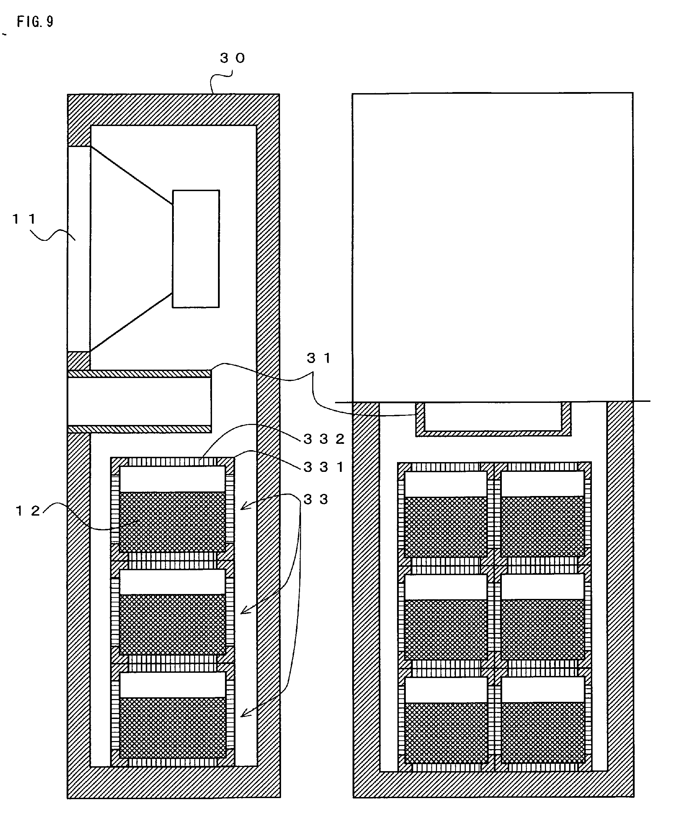

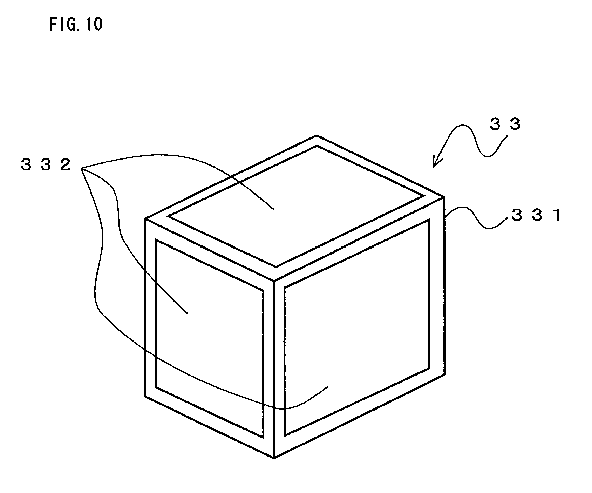

Although in the above description, as shown in FIG. 7, the gas absorption materials 12a segmented by the blocking members 13 are respectively disposed by using the segmentation arrangement mechanism 32, the present invention is not limited thereto. For example, by using blocking members 33 shown in FIG. 9, the blocking members 33 may be disposed inside of the cabinet 30. FIG. 9 is a diagram illustrating a sectional side view and a rear view, a part of which is a sectional view, of one example in which the blocking members 33 are disposed inside of the cabinet 30. FIG. 10 is a diagram illustrating an oblique perspective view of the blocking member 33.

As shown in FIG. 10, the blocking member 33 has a rectangular parallelepiped housing 331 and films 332. On faces of the housing 331, openings are respectively formed. The films 332 are elastic. The films 332 are respectively attached on the housing 331 so as to cover the openings formed on the respective faces. Inside of the housing 331, the gas absorption material 12a, which is obtained by segmenting the gas absorption material 12, is disposed. As mentioned above, by disposing a plurality of the blocking members 33, the number of which is the same as the number of segments, the similar effect obtained in the above-described case where the segmentation arrangement mechanism 32 is used can be attained.

It is the film 352 attached on the housings 331 that transmits the acoustic pressure to the gas absorption material 12a disposed inside of the blocking member 33. Here, the blocking member 33 has the housing 331 and a space is formed in an upper portion of the gas absorption material 12a. Among the films 332 attached on the housing 331, the film 332 which contacts the above-mentioned space does not contact the gas absorption material 12a. In FIG. 9, an entire face of the film 332 attached on the upper face of the housing 331 and upper portions of the films 332 attached on side faces of the housing 331 do not contact the gas absorption material 12. Here, if the films 332 contact the gas absorption material 12a, it is difficult for the films 332 to vibrate. In other words, it is difficult for the films 332 to transmit the acoustic pressure to the gas absorption material 12a. However, since when the blocking member 33 is used, the space is formed inside of the blocking member 33, it can be ensured that the film 332 which does not contact the gas absorptionmaterial 12a is present. As a result, the difficulty in the transmission of the acoustic pressure to the gas absorption material 12a, which is caused when all of the films 332 contact the gas absorption material 12a, can be prevented.

Although the plurality of the blocking members 33 are used to segment the gas absorption material 12, when the above-described effect obtained by segmenting the gas absorption material 12 is not expected, only one blocking member 33 may be used. In other words, all of the gas absorption material 12 may be disposed inside of the blocking member 33. Thus, in the first and second embodiments, the difficulty in the transmission of the acoustic pressure to the gas absorption material 12, which is caused when the blocking member 13 entirely contacts the gas absorption material 12, can be prevented.

(Fourth Embodiment)

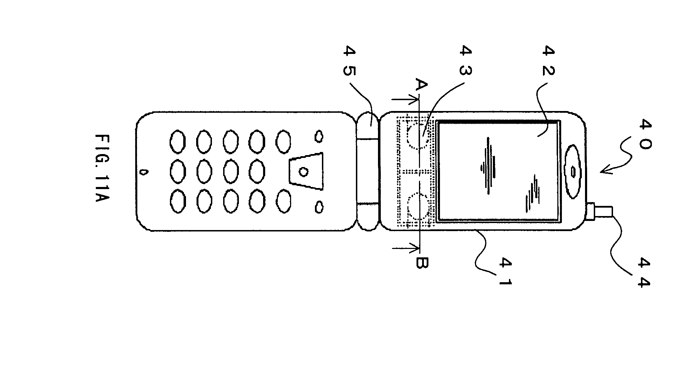

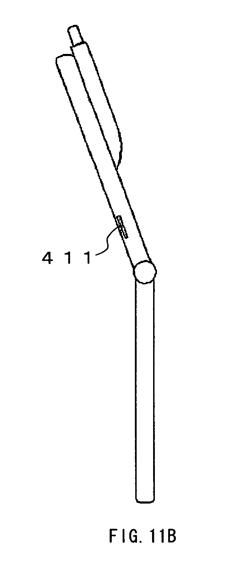

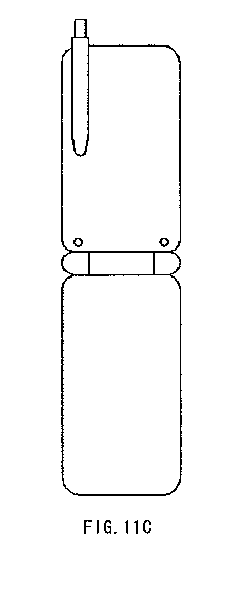

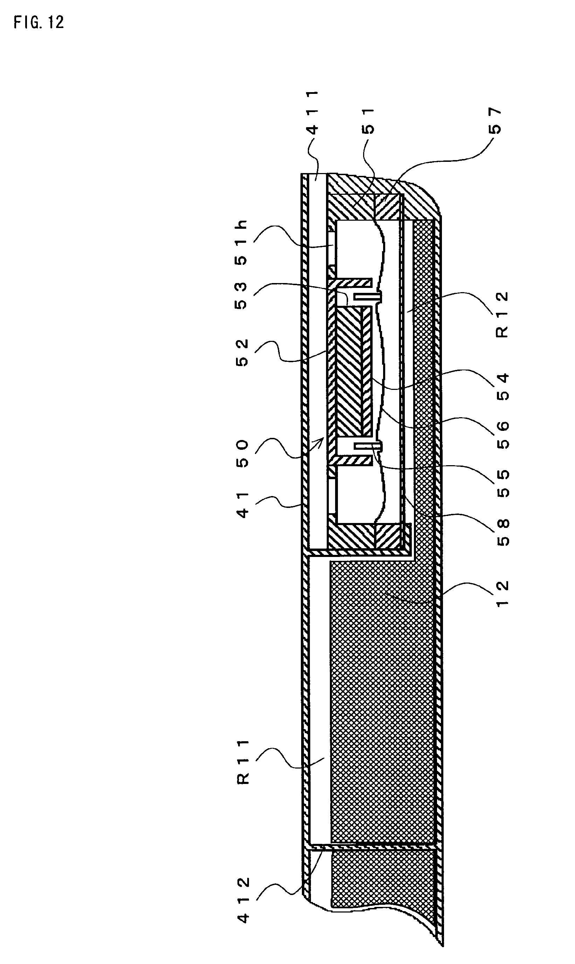

The loudspeaker systems according to the above-described first to third embodiments can be applied to, for example, a mobile terminal unit such as a mobile phone. Other examples of the mobile terminal unit are portable apparatuses such as an HDD player and a semiconductor memory player. Hereinunder, referring to FIGs. 11A to 11C and 12, a fourth embodiment in which the loudspeaker system of the present invention is applied to the mobile phone as the mobile terminal unit will be described. FIG. 11A is a diagram illustrating a front view of the mobile phone in which the loudspeaker system of the present invention is mounted. FIG. 11B is a diagram illustrating a side view of the mobile phone shown in FIG. 11A. FIG. 11C is a diagram illustrating a rear view of the mobile phone shown in FIG. 11A. FIG. 12 is a diagram illustrating a sectional view of the mobile phone along a line A-B shown in FIG. 11A.

In FIGs. 11A to 11C, the mobile phone 40 is a foldable-type mobile phone. The mobile phone 40 mainly comprises a main body case 41, a liquid crystal display 42, loudspeaker systems 43, an antenna 44, and a hinge section 45. The liquid crystal display 42 is mounted on the main body case 41. As shown in FIG. 11B, on a side face of the main body case 41, an opening 411 is formed. Although details will be described below, the loudspeaker system 43 has the same configuration as any of those of the loudspeaker systems according to the above-described first to third embodiments. The loudspeaker system 43 is provided between the liquid crystal display 42 and the hinge section 45. As shown in FIG. 12, the loudspeaker system 43 mainly comprises a speaker unit 50 and a gas absorption material 12. In FIG. 12, the main body case 41 functions as a cabinet of the loudspeaker system 43. In other words, the cabinet is formed in a manner integrated with the main body case 41. A partition plate 412 for separating the cabinets of the two right and left loudspeaker systems 43 is provided inside of the main body case 41. The gas absorption material 12 is powdery activated carbon with an average particle diameter of, for example, 0.01 to 0.03 mm and is disposed in an internal room R11 of the cabinet formed inside of the main body case 41.

The speaker unit 50 is an electrodynamic-type speaker. The speaker unit 50 comprises a frame 51, a yoke 52, a magnet 53, a plate 54, a voice coil 55, a diaphragm 56, a gasket 57, and a shielding mesh 58. The yoke 52 is fixed on the frame 51 and integrated with the frame 51. The magnet 53 is, for example, cylindrical and fixed on a lower face of the yoke 52. The plate 54 is, for example, cylindrical and fixed on a lower face of the magnet 53. Between the yoke 52 and a peripheral face of the plate 54, a magnetic gap is formed. The diaphragm 56 is made of a resin film, for example, of polyethylene naphthalate, polyimide, or the like. A periphery of the diaphragm 56 is fixed so as to be sandwiched between the gasket 57 and the frame 51. The voice coil 55 is a coil formed in, for example, a cylindrical shape. The voice coil 55 is fixed on the diaphragm 56 so as to be disposed in the above-mentioned magnetic gap. The above-mentioned gasket 57 is, for example, toroidal and used for ensuring an amplitude of the diaphragm 56 such that the diaphragm 56 does not contact the shielding mesh 58. The gasket 57 is fixed on a lower face of the frame 51. The shielding mesh 58 is permeable and a mesh-structured member for shielding the powdery gas absorption material 12. The shielding mesh 58 is fixed on a lower face of the gasket 57. The shielding mesh 58 is disposed so as to partition a space between the gas absorption material 12 and the voice coil 55 of the speaker unit 50 as well as a space between the gas absorption material 12 and the diaphragm 56. On an upper face of the frame 51, a plurality of sound holes 51h are formed such that sound emitted from the diaphragm 56 is emitted from the opening 411.

The speaker unit 50 is disposed so as to sandwich a room R12 between the speaker unit 50 and a bottom face portion of the main body case 41. As shown in FIG. 12, the speaker unit 50 is disposed such that a face of the diaphragm 56, on which the voice coil 55 is not fixed, faces an internal space (the rooms R11 and R12) of the main body case 41. The voice coil 55 is disposed such that the diaphragm 56 is sandwiched between the voice coil 55 and the gas absorption material 12. Here, the shielding mesh 58 is a mesh having minute openings, which can prevent the powdery gas absorption material 12 from flowing into a side of the diaphragm 56. However, even if the powdery gas absorption material 12 slightly flows into the side of the diaphragm 56, since the diaphragm 56 is disposed so as to be sandwiched between the internal space of the main body case 41 and the voice coil 55, the diaphragm 56 functions as a shielding plate, thereby preventing the above-mentioned powdery gas absorption material 12 from reaching the voice coil 55. As a result, it can be prevented that contacting of the powdery gas absorption material 12 and the voice coil 55 generates abnormal sound and causes a failure due to an electrical short circuit.

Next, operations of the loudspeaker system 43 shown in FIG. 12 will be described. The speaker unit 50 is an electrodynamic-type speaker. Since operations thereof are the same as those of a general electrodynamic-type speaker, detailed descriptions will be omitted. For example, when the mobile phone 40 receives a reception signal from the antenna 44, the reception signal is appropriately processed by a signal processing section (not shown) or the like and inputted to the speaker unit 50. And for example, when a melody signal for signaling an incoming call is applied to the speaker unit 50, a driving force is generated in the voice coil 55. This driving force vibrates the diaphragm 56 and generates melody sound. The melody sound generated from an upper face of the diaphragm 56 is emitted through the sound holes 51h formed on the frame 51 from the opening 411. On the other hand, sound generated from a lower face of the diaphragm 56 passes through the shielding mesh 58 and changes a pressure in the internal space (the rooms R11 and R12) of the cabinet, which is formed in the main body case 41. However, owing to the physical absorption effect of the gas absorption material 12, the pressure change in the above-mentioned internal space is suppressed and a volume in the internal space is expanded in an equivalent manner.

As described above, by applying the loudspeaker system of the present invention to the mobile phone, enriched bass reproduction on the mobile phone can be realized.

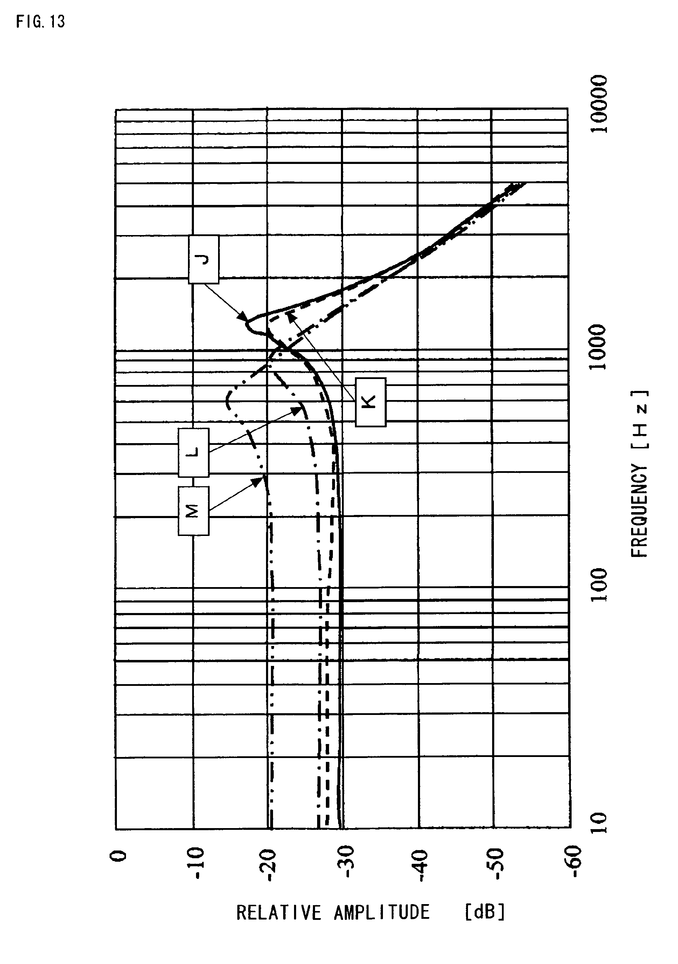

A general mobile phone has a very small internal volume and a bore of a speaker unit which can be mounted is small. For these reasons, a reproduction band of a loudspeaker system which reproduces a ring tone and conversational sound tends to be a band of greater than or equal to 500 Hz. In this case, if the conventional granular activated carbon is used, the physical absorption effect is hardly obtained in a high frequency band of 100 to 200 or more Hz. FIG. 13 is a diagram showing a result obtained when amplitude characteristics of the diaphragm 56 in the speaker unit 50 are measured on the loudspeaker system 43 shown in FIGs. 11A to 11C, and FIG. 12. In FIG. 13, a volume of the internal space (the rooms R11 and R12) of the cabinet is 1 cc. A bore of the speaker unit 50 is $\phi$ 14 mm. In FIG. 13, a graph J shows the amplitude characteristics obtained when nothing is contained in the cabinet. A graph K shows the amplitude characteristics obtained when the conventional granular activated carbon (average grain diameter: 0.1 to 0.3 mm, weight: 100 mg) is contained. A graph L shows the amplitude characteristics obtained when the powdery activated carbon (average particle diameter: 0.01 to 0.03 mm, weight: 100mg) is contained as the gas absorption material 12. A graph M shows the amplitude characteristics obtained when the speaker unit 50 is used in a stand-alone manner. In FIG. 13, the respective amplitude characteristics are relatively shown as relative amplitudes. Note that the amplitude characteristics obtained when the speaker unit 50 is used in a stand-alone manner are the amplitude characteristics obtained when the speaker unit 50 is not mounted in the main body case 41 and the measurement is conducted on the single speaker unit 50.

In the graph M, it is understood that in the amplitude characteristics obtained when the speaker unit 50 is used in a stand-alone manner, there is a peak of the amplitude when a resonance frequency of a vibration system is $f_{0M}$= 606. 3 Hz. At low frequencies of less than or equal to the resonance frequency $f_{0M}$, the amplitude value is constant due to the influence of stiffness of the diaphragm 56.

In the graph J, it is understood that in the amplitude characteristics obtained when nothing is contained in the cabinet, the resonance frequency of the vibration system rises to $f_{0J}$ = 1256.3 Hz due to the influence of stiffness which the rooms R11 and R12 have. At low frequencies of less than or equal to the resonance frequency $f_{0J}$, the stiffness which the rooms R11 and R12 have is larger than that of the diaphragm 56. Because of this, at the low frequencies of less than or equal to the resonance frequency $f_{0J}$, the amplitude value is constant due to the influence of the stiffness which the rooms R11 and R12 have.

In the graph K, it is shown that in the amplitude characteristics obtained when the conventional granular activated carbon is contained, the resonance frequency is $f_{0K}$ = 1256. 3 Hz, which is the same as the resonance frequency $f_{0J}$ obtained when nothing is contained in the cabinet. Accordingly, it is understood that at around a frequency 1200 Hz, the volume expansion effect cannot be obtained by the granular activated carbon.

On the other hand, at low frequencies of less than or equal to the resonance frequency $f_{0K}$, unlike in the graph J showing the case where nothing is contained, the amplitude value increases in accordance with a decrease in the frequencies. This shows that the physical absorption effect of the granular activated carbon is exhibited in accordance with the decrease in the frequencies. When the graph J and the graph K are compared, it is understood that although at the low frequencies of less than or equal to 200 Hz, the physical absorption effect can be obtained by the granular activated carbon with the average particle diameter of 0.1 to 0.3 mm, at the high frequencies of greater than or equal to 200 Hz, the physical absorption effect can be hardly obtained. This result corresponds to the characteristics shown in FIG. 6 disclosed in the above-mentioned patent document 1.

In the graph L, it is shown that in the amplitude characteristics obtained when the powdery activated carbon is contained as the gas absorption material 12, the resonance frequency is $f_{0L} = 881.3$ Hz, which is lower than the resonance frequency $f_{0J}$ obtained when nothing is contained in the cabinet. Here, in consideration of a relationship between the resonance frequency and the volume of the cabinet, a ratio of the volume expansion of the cabinet, in the case where the gas absorption material 12 is used, to the volume expansion of the cabinet, in the case where nothing is contained, is the following value.

$$\{(f_{0J}/f_{0M})^2 - 1\}/\{(f_{0L}/f_{0M})^2 - 1\} = 2.96$$

In other words, it is understood that the volume of the cabinet is expanded approximately three-fold in an equivalent manner. In the graph L, at the low frequencies of less than or equal to the resonance frequency $f_{0L}$, the amplitude value is constant. At the low frequencies of less than or equal to the resonance frequency $f_{0L}$, when the graph J and the graph L are compared, the amplitude value increases. This increase in the amplitude value can be observed at the high frequencies of greater than or equal to 200 Hz. In other words, it is understood that when the gas absorption material 12 is used, a great volume expansion effect can be obtained at not only the low frequencies of less than or equal to 200 Hz but also the high frequencies of greater than or equal to 200 Hz.

This is because whereas in the conventional granular activated carbon, as shown in FIG. 19, the macropores 100 serving as the passageways of the gas functions as the high-cut filter and thereby the flow of the gas into the micropores 101 is suppressed at the high frequencies, since the gas absorption material 12 has the particle diameter smaller than the grain diameter of the conventional granular activated carbon and has the smaller number of the macropores 100, the effect of the macropores 100 functioning as the high-cut filter is reduced.

As described above, whereas only in the low frequency band of 100 to 200 Hz or less, the physical absorption effect is obtained by the conventional granular activated carbon, by using the gas absorption material 12, the frequency band in which the physical absorption effect can be obtained can be expanded to the high frequency band of 100 to 200 Hz or more. In other words, also in an apparatus for a mobile terminal, of which reproduction frequencies are high, the volume expansion effect can be exhibited, thereby expanding the low frequency band. By expanding the low frequency band, the acoustic pressure level can be improved also in the high frequency band of 100 to 200 Hz or more.

Although in the present embodiment, the speaker unit 50 is disposed such that the face of the diaphragm 56, on which the voice coil 55 is not fixed, faces the internal space of the main body case 41, the present invention is not limited thereto. The speaker unit 50 shown in FIG. 12 may be disposed upside down. Thereupon, the speaker unit 50 is disposed such that the sound holes 51h contact the room R12. In this case, the gas absorption material 12 is likely to flow into the vicinity of the voice coil 55. Therefore, in this case, by providing the shielding mesh 58 for the sound holes 51h, the inflow of the gas absorption material 12 can be prevented. As mentioned above, it is only required that the shielding mesh 58 is disposed so as to partition the speaker unit 50 and the gas absorption material 12. Although the shielding mesh 58 is provided in the speaker unit 50, the shielding mesh 58 may not be provided in the speaker unit 50 and may be provided so as to partition the speaker unit 50 and the gas absorption material 12. In this case, the loudspeaker system 43 comprises the speaker unit 50 which does not have the shielding mesh 58, the gas absorption material 12, and the cabinet formed by the main body case 41. Thus, it can be prevented that the gas absorption material 12 flows into the speaker unit 50.

Although the cabinet of the above-described loudspeaker system 43 utilizes the internal space of the main body case 41, the cabinet may be provided separately from the main body case 41. And each of the loudspeaker systems according to the first to third embodiments itself may be mounted in a dedicated space inside of the main body case 41. In this case, in an assembly process of a mobile phone, a process in which the gas absorption material 12 is contained in the cabinet formed in the main body case 41 in an integrated manner can be omitted and adhering of the gas absorption material 12 on the liquid crystal display 42 or the like can be avoided. Thus, a more practical assembly process can be realized.

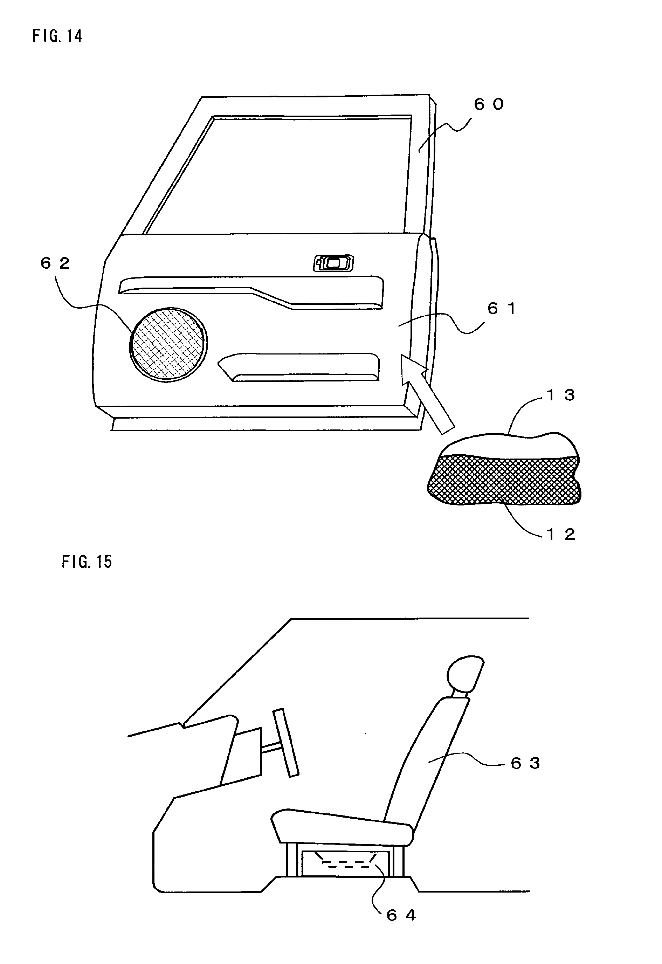

Each of the loudspeaker systems according to the above-described first to third embodiments is not limited to a loudspeaker system mounted in the mobile terminal unit and may be, for example, a loudspeaker system which is mounted inside of a body of a car. First, referring to FIG. 14, a case where each of the loudspeaker systems according to the above-described first to third embodiments is mounted inside of a body of a car will be described. One example of places where the loudspeaker system is mounted inside of the car body is a door of the car. FIG. 14 is a diagram illustrating one example in which the loudspeaker system of the present invention is mounted in the door of the car.

In FIG. 14, the door of the car comprises a window section 60, a door main body 61, a speaker unit 62 a gas absorption material 12, and a blocking member 13. Here, the speaker unit 62 is a general electrodynamic-type speaker which is the same as that of the speaker unit 11 according to each of the above-described first to third embodiments. The speaker unit 62 is mounted in the door main body 61. Inside of the door main body 61, a space is formed. The gas absorption material 12 and the blocking member 13 are disposed in the internal space of the door main body 61. As mentioned above, since the door main body 61 functions as a cabinet, the loudspeaker system of the present invention comprises the speaker unit 11, the door main body 61, the gas absorption material 12, and the blocking member 13. As described above, by mounting the loudspeaker system of the present invention in the door of the car, even when the loudspeaker system is mounted in the same door main body 61 as the conventional one, a volume can be expanded in an equivalent manner and a reduction in an acoustic pressure level can be prevented, being capable of providing an in-vehicle listening environment in which enriched bass is reproduced.

Each of the loudspeaker systems according to the above-described first to third embodiments may be an in-vehicle loudspeaker system which is disposed inside of, for example, a car body. FIG. 15 is a diagram illustrating one example of a loudspeaker system mounted inside of a car. In FIG. 15, a loudspeaker system 64 is disposed, for example, under a seat 63. Here, the loudspeaker system 64 is any of the loudspeaker systems according to the above-described first to third embodiments and detailed descriptions will be omitted. As described above, by mounting the loudspeaker system 64 in a vehicle, even when a volume of a cabinet is the same as the conventional one, a volume can be expanded in an equivalent manner and a reduction in an acoustic pressure level can be prevented, being capable of providing an in-vehicle listening environment in which enriched bass is reproduced.

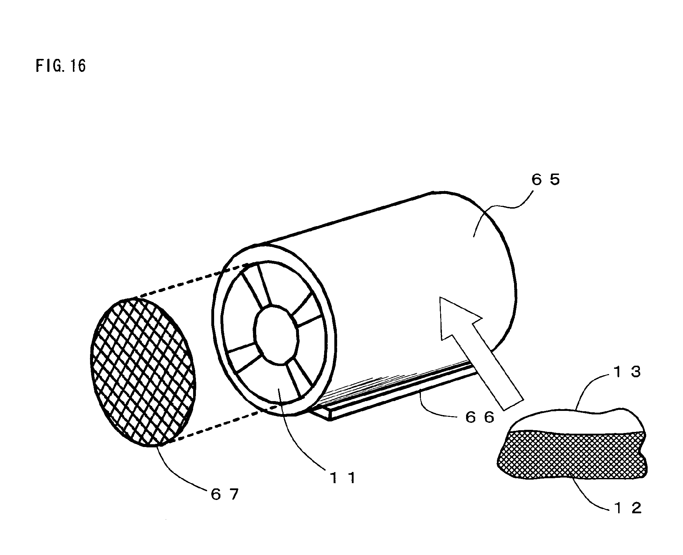

Each of the loudspeaker systems according to the above-described first to third embodiments may be an in-vehicle loudspeaker system as shown in FIG. 16. FIG. 16 is a diagram illustrating another example of a loudspeaker system mounted inside of a car. In FIG. 16, the loudspeaker system comprises a cabinet 65, a plinth 66, a speaker unit 11, a punching net 67, and a gas absorption material 12, and a blocking member 13. The gas absorption material 12 and the blocking member 13 are disposed inside of the cabinet 65. As described above, by mounting the loudspeaker system shown in FIG. 15 in a vehicle, even when a volume of a cabinet is the same as the conventional one, the volume of the cabinet can be expanded in an equivalent manner and a reduction in an acoustic pressure level can be prevented, being capable of providing an in-vehicle listening environment in which enriched bass is reproduced. A shape of the cabinet 65 is not limited to a cylindrical shape shown in FIG. 15 and may be a rectangular parallelepiped shape.

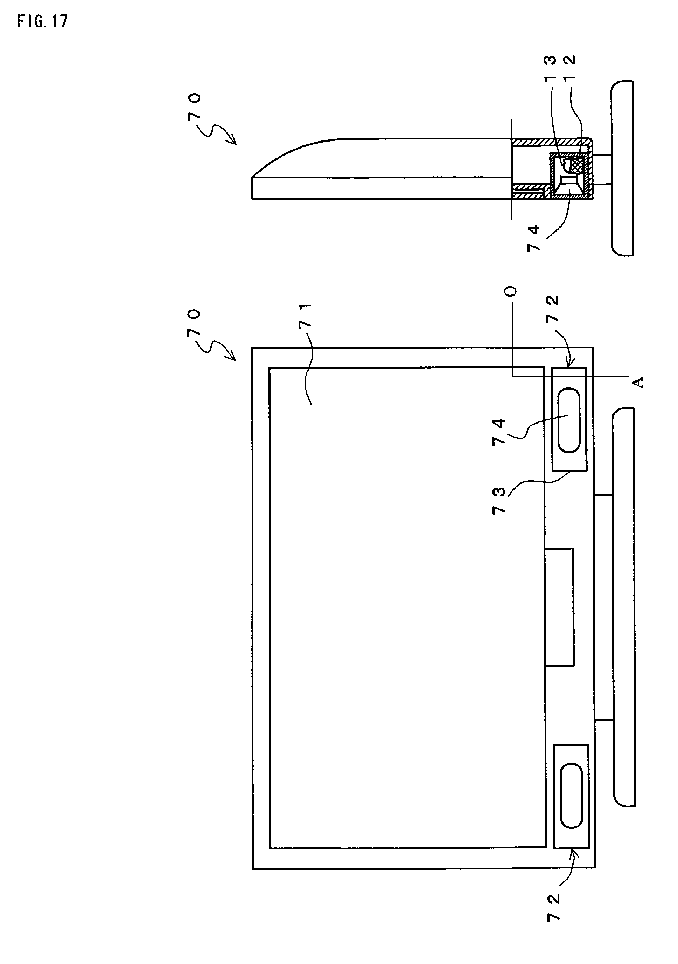

Next, referring to FIG. 17, a case where each of the loudspeaker systems according to the above-describedfirst to third embodiments is mounted in a video apparatus (for example, a CRT-based television, a liquid crystal television, a plasma television, etc.) will be described. FIG. 17 is a diagram illustrating a configuration of one example in which the loudspeaker system is mounted in a thin-shaped television and showing a front view of the thin-shaped television and a side view, a part of which is illustrated by a sectional view along a line O-A. In FIG. 17, a thin-shaped television 70 mainly comprises a display 71 and two loudspeaker systems 72. The loudspeaker systems 72 are any of the loudspeaker systems described in the first to third embodiments and detailed descriptions will be omitted.

A cabinet 73 of the loudspeaker system 72 is disposed inside of a housing provided in a lower portion of the display 71. A speaker unit 74 is an electrodynamic-type speaker having, for example, an elliptical shape and mounted in the cabinet 73. A gas absorption material 12 and a blocking member 13 are disposed inside of the cabinet 73. As described above, by mounting the loudspeaker system of the present invention in the thin-shaped television 70, even when a volume of a cabinet is the same as the conventional one, the volume of the cabinet can be expanded in an equivalent manner and a reduction in an acoustic pressure level can be prevented, being capable of providing an in-vehicle listening environment in which enriched bass is reproduced. Although the loudspeaker systems 72 shown in FIG. 17 are mounted in the lower portions of the display 71, the loudspeaker systems 72 may be disposed on both sides of the display 71.

As described above, by mounting the loudspeaker systems according to the above-described first to third embodiments in a variety of apparatuses and a vehicle, a volume expansion in an equivalent manner is conducted in the variety of apparatuses and the vehicle, and a reduction in an acoustic pressure level can be prevented, realizing enriched reproduction of bass.

Although the speaker units 11, 50, 62, and 74 are the electrodynamic-type speakers, the present invention is not limited thereto. The speaker units may be piezoelectric type, electrostatic type, electromagnetic type speakers, etc., provided that a driving method in which an acoustic pressure emitted from a diaphragm changes a pressure in an internal space of a cabinet is used.

INDUSTRIAL APPLICABILITY

The loudspeaker system of the present invention expands a low frequency band, prevents a reduction in an acoustic pressure level, exhibits a volume expansion effect even in a high frequency band of 100 to 200 Hz or more, and is capable of reproducing enriched bass. The loudspeaker system of the prevent invention can be applied to a liquid crystal television whose thickness is becoming further thinner; a PDP (plasma display) ; a stereo unit; a speaker, for a home theater system, of 5.1 channel reproduction; a mobile terminal unit; an in-vehicle audio apparatus, etc.

**Claims**

1.  A loudspeaker system comprising:

    a cabinet;
    a speaker unit mounted in the cabinet; and
    a powdery gas absorption material which is disposed in an internal space of the cabinet and physically absorbs gas present in the internal space, wherein
    an average particle diameter of the gas absorption material is less than 0.1 mm.

2.  The speaker according to claim 1, wherein diameters of all particles of the gas absorption material are less than 0.1 mm.

3.  The loudspeaker system according to claim 1, wherein the gas absorption material is of activated carbon.

4.  The loudspeaker system according to claim 1, wherein the gas absorptionmaterial is of activated carbon which is produced from plant, petroleum resin, or coal.

5.  The loudspeaker system according to claim 1, further comprising
    a first blocking member for blocking gas, wherein
    the gas absorption material is disposed in an internal space of the first blocking member.

6.  The loudspeaker system according to claim 5, wherein the first blocking member is made of a thin film.

7.  The loudspeaker system according to claim 5, wherein a space is formed inside of the first blocking member and above the gas absorption material.

8.  The loudspeaker system according to claim 5, comprising a plurality of the first blocking members, wherein
    the gas absorptionmaterial is segmented and each segment of the gas absorption material is disposed in an internal space of each of the first blocking members, and
    each of the first blocking members is disposed in an internal space of the cabinet so as to form a space between each other.

9.  The loudspeaker system according to claim 8, further comprising
    a plurality of housings, in at least a part of which an opening is formed, wherein
    a volume of each of the housings is larger than a volume of the first blocking member, and
    the first blocking member is disposed in an internal space of each of the housings.

10. The loudspeaker system according to claim 5, comprising a plurality of the first blocking members, wherein
    the gas absorptionmaterial is segmented and each segment is disposed an internal space of the first blocking member, wherein
    the first blocking member has:

    a housing, in at least a part of which an opening is formed; and
    a film, a periphery of which is attached on the opening, and

    the segmented gas absorption material is each disposed in an internal space of the housing.

11. The loudspeaker system according to claim 1, further comprising a passive radiator which is mounted in the cabinet and driven by vibration of the speaker unit.

12. The loudspeaker system according to claim 11, further comprising a plate member which is disposed between the passive radiator and the gas absorption material so as to form a space between the plate member and the passive radiator.

13. The loudspeaker system according to claim 12, wherein in the plate member, an opening is formed in a direction from the passive radiator toward the gas absorption material.

14. The loudspeaker system according to claim 1, wherein the cabinet is a closed-type cabinet.

15. The loudspeaker system according to claim 1, further comprising an acoustic port which is mounted in the cabinet and acoustically couples an internal space and an external space of the cabinet.

16. A mobile terminal unit comprising:

   a loudspeaker system according to any of claims 1 to 15; and
   a case supporting the loudspeaker system.

17. The mobile terminal unit according to claim 16, wherein
   the speaker unit has;
   a voice coil; and
   a diaphragm, on one face of which the voice coil is fixed, wherein
   the speaker unit is mounted such that another face of the diaphragm faces an internal space of the cabinet.

18. The mobile terminal unit according to claim 16, further comprising
   a second blocking member for blocking the gas absorption material, wherein
   the second blocking member is disposed in the internal space of the cabinet so as to partition the speaker unit and the gas absorption material.

19. A vehicle comprising:

   a loudspeaker system according to any of claims 1 to 15; and
   a car body, inside of which the loudspeaker system is disposed.

20. A video apparatus comprising:

   a loudspeaker system according to any of claims 1 to 15; and
   a housing, inside of which the loudspeaker system is disposed.

FIG. 1

FIG. 2

FIG. 3

FIG. 4

FIG. 5

ELECTRICAL IMPEDANCE [Ω]

ACOUSTIC PRESSURE [dB]

FREQUENCY [Hz]

FIG. 6

FIG. 7

FIG. 8

FIG. 9

FIG. 10

FIG. 11A

411

FIG. 11B

FIG. 11C

FIG. 12

FIG. 13

EP 1 868 410 A1

FIG. 14

FIG. 15

FIG. 16

65

11

67

66

13

12

FIG. 17

FIG. 18

FIG. 19

MICROPORES 101

MACROPORES 100

<div align="center">**INTERNATIONAL SEARCH REPORT**</div>

| | International application No. |
|---|---|
| | PCT/JP2006/306173 |

**A.  CLASSIFICATION OF SUBJECT MATTER**
*H04R1/02*(2006.01), *H04R1/28*(2006.01)

According to International Patent Classification (IPC) or to both national classification and IPC

**B.  FIELDS SEARCHED**

Minimum documentation searched (classification system followed by classification symbols)
*H04R1/02*(2006.01), *H04R1/28*(2006.01)

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 57-210798 A  (Matsushita Electric Industrial Co., Ltd.), 24 December, 1982 (24.12.82), All pages; all drawings (Family: none) | 1-20 |
| A | JP 1-226296 A  (Sony Corp.), 08 September, 1989 (08.09.89), All pages; all drawings (Family: none) | 1-20 |
| A | JP 2003-154261 A  (Mitsui Mining Co., Ltd.), 27 May, 2003 (27.05.03), All pages; all drawings (Family: none) | 1-20 |

☐  Further documents are listed in the continuation of Box C.          ☐  See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered   to be of particular relevance | |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| 10 July, 2006 (10.07.06) | 18 July, 2006 (18.07.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60500645 W